# FASCICULE DE BREVET EUROPEEN

(11) **EP 3 380 983 B1**
(45) Date de publication et mention de la délivrance du brevet: **26.08.2020**
(21) Numéro de dépôt: 16813009.4
(22) Date de dépôt: 24.11.2016
(51) Int. Cl.: H04N 21/266, H04N 21/237, H04N 21/254

(54) **PROCÉDÉ D'IDENTIFICATION DE PROCESSEURS DE SÉCURITÉ**
VERFAHREN ZUR IDENTIFIZIERUNG VON SICHERHEITSPROZESSOREN
METHOD FOR THE IDENTIFICATION OF SECURITY PROCESSORS

(30) Priorité: 27.11.2015 FR 1561518
(43) Date de publication de la demande: 03.10.2018
(73) Titulaire: Viaccess, 92057 Paris La Défense Cedex (FR)
(72) Inventeur: TRONEL, Bruno, 78290 Croissy-sur-Seine (FR)
(74) Mandataire: Colombo, Michel
(86) Numéro de dépôt international: PCT/FR2016/053065
(87) Numéro de publication internationale: WO 2017/089705

(56) Documents cités:
- US-A1- 2009 323 949
- US-A1- 2013 031 576

## Description

L'invention concerne un procédé d'identification de processeurs de sécurité, dans un système de fourniture de contenus multimédia protégés. L'invention concerne également une tête de réseau, un processeur de sécurité, un dispositif d'identification et un support d'enregistrement d'informations pour la mise en œuvre de ce procédé.

Ce procédé peut être mis en œuvre au titre de tout service d'identification de processeurs de sécurité illégitimement partagés dans un système de fourniture de contenus multimédia protégés.

Dans le système de fourniture de contenus multimédia protégés, une tête de réseau prend en charge la protection des contenus multimédia, et leur transmission à un ensemble de terminaux. Un terminal, muni d'un processeur de sécurité au moins, est utilisé par un client du système pour accéder à un contenu.

Accéder à un contenu multimédia protégé, signifie ici le charger en mémoire et en lever la protection, à la volée alors qu'on le reçoit, ou depuis un support d'enregistrement sur lequel il a préalablement été enregistré, en vue de le jouer, de l'enregistrer, ou d'en faire toute autre utilisation offerte par le système.

Les contenus fournis sont des contenus audiovisuels, par exemple des programmes de télévision, des contenus audio seulement, par exemple un programme radiophonique, ou plus généralement tout contenu numérique contenant de la vidéo et/ou de l'audio tel qu'une application informatique, un jeu, un diaporama, une image ou tout ensemble de données.

Parmi ces contenus, on considérera plus particulièrement dans la suite des contenus dits temporels. Un contenu multimédia temporel est un contenu multimédia dont le jeu est une succession, dans le temps, de sons, dans le cas d'un contenu temporel audio, ou d'images, dans le cas d'un contenu temporel vidéo, ou de sons et d'images temporellement synchronisés entre eux dans le cas d'un contenu multimédia temporel audiovisuel. Un contenu multimédia temporel peut également comporter des composantes temporelles interactives synchronisées avec les sons ou les images.

Pour être fourni, un tel contenu est d'abord codé, c'est-à-dire compressé, de façon à ce que sa transmission requière une moindre bande passante.

A cet effet, la composante vidéo du contenu est codée selon un format vidéo, tel que MPEG-2. Le lecteur intéressé pourra trouver une présentation complète de ce format dans le document publié par l'Organisation internationale de normalisation sous la référence ISO/IEC 13818-2:2013 et le titre « Technologies de l'information - Codage générique des images animées et du son associé - Partie 2: Donnée vidéo ». De nombreux autres formats, tels que MPEG-4 ASP, MPEG-4 Part 2, MPEG-4 AVC (ou Part 10), HEVC (High Efficiency Video Coding), ou WMV (Windows Media Video) peuvent alternativement être utilisés, et reposent sur les mêmes principes.

Une telle méthode de codage fait appel à des procédés généraux de compression de données. Pour les images fixes, elle exploite notamment la redondance spatiale interne à une image, la corrélation entre les points voisins et la moindre sensibilité de l'œil aux détails. Pour les images animées, elle exploite la forte redondance temporelle entre images successives. L'exploitation de cette dernière permet de coder certaines images du contenu, ici dites déduites, en référence à d'autres, ici dites sources, par exemple par prédiction ou interpolation, de sorte que leur décodage n'est possible qu'après celui desdites images sources. D'autres images, ici dites initiales, sont codées sans référence à de telles images sources, c'est-à-dire qu'elles contiennent chacune, lorsqu'elles sont codées, l'ensemble des informations nécessaires à leur décodage et donc qu'elles peuvent être complètement décodées indépendamment des autres images. Les images initiales sont ainsi le point d'entrée obligatoire lors de l'accès au contenu. Le contenu codé résultant ne comporte donc pas les données nécessaires au décodage de chacune des images indépendamment des autres, mais est constitué de « séquences » selon la terminologie MPEG-2. Une séquence réalise la compression d'au moins un « groupe d'images » (ou GOP, pour Group Of Pictures, dans MPEG-2). Un groupe d'images est une suite d'images consécutives dans laquelle chaque image est, soit initiale et source pour au moins une image déduite contenue dans la même suite d'images consécutives, soit déduite et telle que chacune des images sources nécessaires à son décodage appartient à la même suite d'images consécutives, et ne contenant pas de suite d'images consécutives plus petite et possédant ces mêmes propriétés. Le groupe d'images est ainsi la plus petite partie de contenu à laquelle on peut accéder sans avoir à décoder au-préalable une autre partie de ce contenu. Une séquence est délimitée par une « en-tête » et une « fin », chacune identifiée par un premier code spécifique. L'en-tête comporte des paramètres qui caractérisent des propriétés attendues des images décodées, telles notamment que tailles horizontales et verticales, ratio, fréquence. Le standard recommande de répéter l'en-tête entre les groupes d'images de la séquence, de façon à ce que ses occurrences successives soient espacées d'environ quelques secondes dans le contenu codé.

Par exemple, un groupe d'images comporte le plus couramment de 10 à 12 images, représentant une durée de jeu comprise entre 0,4 et 0,5 seconde, dans un système à 25 images par seconde.

Un contenu multimédia temporel peut comporter plusieurs composantes vidéo. Dans ce cas, chacune de ces composantes est codée comme ci-dessus décrit.

La composante audio du contenu est par ailleurs codée selon un format audio tel que MPEG-2 Audio. Le lecteur intéressé pourra trouver une présentation complète de ce format dans le document publié par l'Organisation internationale de normalisation sous la référence ISO/IEC 13818-3:1998 et le titre « Technologies de l'information - Codage générique des images animées et des informations sonores associées - Partie 3: Son ». De nombreux autres formats, tels que MPEG-1 Layer III, mieux connu sous l'appellation MP3, AAC (Advanced Audio Coding), Vorbis ou WMA (Windows Media Audio), peuvent alternativement être utilisés, et reposent sur les mêmes principes.

Une telle méthode de compression d'un contenu temporel audio obéit aux mêmes principes ci-dessus décrits pour celle d'un contenu temporel vidéo. Le contenu codé résultant est donc, de façon analogue, constitué de « trames ». Une trame est l'analogue, en audio, d'un groupe d'images en vidéo. La trame est donc notamment la plus petite partie de contenu audio à laquelle on peut accéder sans avoir à décoder une autre partie de ce contenu audio. La trame contient en outre l'ensemble des informations utiles à son décodage.

Par exemple, une trame comporte 384 ou 1152 échantillons codant chacun un son, représentant, selon la fréquence d'échantillonage du signal, une durée de jeu de 8 à 12, ou 24 à 36 millisecondes, soit typiquement quelques dizaines de millisecondes.

Un contenu multimédia temporel peut comporter plusieurs composantes audio. Dans ce cas, chacune de ces composantes est codée comme ci-dessus décrit.

Les composantes codées du contenu multimédia, également qualifiées de trains élémentaires de données, sont ensuite multiplexées, c'est-à-dire, notamment, synchronisées, puis combinées en un seul train de données, également dit flux multimédia, ou flux.

Un tel contenu, notamment lorsqu'il est l'objet de droits tels que des droits d'auteur ou des droits voisins, est fourni protégé par un système de protection de contenus multimédia, qui permet d'assurer le respect de conditions d'accès au contenu qui découlent de ces droits.

Il est alors typiquement fourni scindé en plusieurs segments successifs de contenu temporellement ordonnés les uns par rapport aux autres et individuellement protégés par le système de protection de contenus.

Par « segment », on désigne une partie restreinte du flux multimédia en clair dont le jeu a une durée inférieure à celle du jeu du flux multimédia en entier. Un segment comporte donc une partie restreinte de chaque composante vidéo ou audio du flux multimédia en clair, dont le jeu a une même durée inférieure à celle du jeu du flux multimédia en entier. Ces parties restreintes de composantes sont synchronisées dans le flux pour être jouées simultanément. Un segment comporte donc la partie restreinte de la suite temporelle de séquences vidéo ou de groupes d'images, ou de trames audio réalisant le codage de cette partie restreinte de composante du flux multimédia en clair. Cette partie restreinte est constituée d'une pluralité de séquences vidéos ou de groupes d'images, ou de trames audio successives. Successives s'entend ici comme se suivant immédiatement, c'est-à-dire sans être séparées, dans le déroulement temporel du contenu, par d'autres séquences vidéo ou de groupes d'images, ou de trames audio. Typiquement, un segment comporte plus de dix, cent, mille ou dix mille, groupes d'images vidéo successifs d'une même composante vidéo codée du flux, ou plus de dix à cent fois plus de trames audio successives d'une même composante audio codée du flux.

Chaque segment est typiquement chiffré au titre de sa protection. Ce chiffrement est généralement réalisé au moyen d'une clé spécifique de chiffrement, par un algorithme symétrique. Il s'applique au segment considéré du flux résultant du multiplexage ou, avant multiplexage, aux parties restreintes des composantes du contenu codé, qui composent ce segment. La clé est dite spécifique car elle est uniquement utilisée pour chiffrer ce segment parmi l'ensemble des segments du contenu multimédia.

Un segment n'est donc pas caractérisé par sa structure, mais par la clé utilisée pour le chiffrer. Un segment est donc la pluralité de séquences vidéos et de trames audios immédiatement successives chiffrées avec une même clé.

Accéder à un contenu multimédia temporel ainsi protégé, signifie ici plus précisément, successivement accéder, à la volée alors qu'on les reçoit, à des segments successifs, c'est-à-dire :
- charger en mémoire les segments successifs du contenu multimédia, puis
- en lever la protection, puis
- les décoder, puis
- les transmettre à un appareil multimédia apte à les jouer, les enregistrer, ou en faire toute autre utilisation offerte par le service de fourniture de contenus multimédia protégés. L'accès au contenu multimédia temporel protégé ne sera dans la suite décrit qu'en vue de son jeu. Il est identique dans le cas de toute autre utilisation offerte par le service de fourniture de contenus multimédia protégés.

Par « en clair », on désigne le fait que le flux multimédia ou le segment n'a plus besoin d'être désembrouillé pour être joué, par un appareil multimédia, de façon directement perceptible et intelligible par un être humain.

Par « appareil multimédia », on désigne en outre tout dispositif apte à jouer le flux multimédia en clair, tel qu'un téléviseur ou un lecteur multimédia.

Enfin, par « à la volée », on désigne le fait que les segments du contenu multimédia sont traités au fur et à mesure de leur réception, sans attendre que le contenu multimédia complet, c'est-à-dire l'ensemble de ses segments, ait été entièrement reçu.

Afin de lever la protection d'un segment chiffré d'un contenu multimédia protégé, en vue d'accéder à ce contenu, un terminal doit déchiffrer ce segment chiffré. A cette fin, il doit obtenir la clé nécessaire à ce déchiffrement.

Pour le permettre, la tête de réseau transmet le segment chiffré de contenu multimédia protégé, synchronisé avec un message de contrôle d'accès comportant un cryptogramme de la clé nécessaire au déchiffrement du segment chiffré. Ce cryptogramme est typiquement obtenu en chiffrant, par un algorithme symétrique, la clé spécifique nécessaire au déchiffrement du segment chiffré.

Dans un tel système, un terminal reçoit donc, synchronisé avec un segment chiffré de contenu multimédia, le message de contrôle d'accès comportant le cryptogramme de la clé de déchiffrement nécessaire au déchiffrement de ce segment. La clé nécessaire au déchiffrement du cryptogramme, dite clé d'exploitation, a préalablement été fournie, de façon connue dans l'art antérieur, aux terminaux qui ont acquis un droit de jouer le contenu multimédia protégé.

Le système de protection de contenus utilisé est typiquement un système d'accès conditionnel, ou CAS, pour Conditional Access System, en anglais. La terminologie du domaine des systèmes d'accès conditionnel est ainsi utilisée dans la suite de ce document. Le lecteur intéressé pourra par exemple en trouver une présentation plus complète dans le document : « Functional Model of a Conditional Access System », EBU Review, Technical European Broadcasting Union, Bruxels, BE, N° 266, le 21 décembre 1995.

Un segment de contenu multimédia a alors une durée de jeu prédéterminée, dite cryptopériode du système. Par abus de langage, le segment lui-même est parfois désigné comme cryptopériode. La clé spécifique de chiffrement d'un segment de contenu multimédia est dite mot de contrôle, ou CW, pour control word, en anglais. La clé nécessaire au déchiffrement du segment chiffré est égale au mot de contrôle à l'aide duquel le segment a été chiffré. Dans ce contexte, chiffrement et déchiffrement d'un segment de contenu multimédia, sont également désignés comme embrouillage et désembrouillage, respectivement. Le message de contrôle d'accès comportant un cryptogramme d'un mot de contrôle est enfin un message de contrôle des titres d'accès, ou ECM, pour Entitlement Control Message, en anglais. L'ECM peut également comporter une section confidentielle, c'est-à-dire réservée à la transmission de données chiffrées, de longueur prédéterminée.

Pour accéder au contenu en vue de le jouer, le terminal traite l'ECM reçu synchronisé avec un segment de contenu multimédia embrouillé. Il le transmet d'abord à un processeur de sécurité dont il est muni. Ce processeur de sécurité est dédié à la mise en œuvre de fonctions de sécurité telles que, notamment, la mémorisation sécurisée des clés, et l'exploitation des messages de contrôle d'accès, et en particulier des ECM. Ce processeur de sécurité est typiquement un composant matériel, tel qu'un microprocesseur dédié ou une carte à puce, également simplement dite carte, dans la suite, respectivement intégré ou associée via un lecteur de cartes, au terminal, ou un module logiciel du terminal.

Si, suite à l'acquisition légitime, par le client du système, du droit de jouer le contenu, le processeur de sécurité a dûment reçu de la tête de réseau la clé d'exploitation, le processeur de sécurité déchiffre le cryptogramme du mot de contrôle au moyen de la clé d'exploitation, puis retourne le mot de contrôle au terminal. Le désembrouilleur du terminal peut donc désembrouiller le segment de contenu multimédia embrouillé pour l'obtenir en clair. Cela permet ainsi l'accès au segment de contenu multimédia, puis sa transmission à l'appareil multimédia, et son jeu par cet appareil.

Dans le cas contraire, ou bien le processeur de sécurité en retourne le diagnostic au terminal, qui inhibe l'exploitation de l'ECM, et ne déchiffre notamment pas le cryptogramme du mot de contrôle qu'il comporte, ou bien le processeur de sécurité retourne au terminal une valeur erronée du mot de contrôle, et le désembrouillage du segment de contenu multimédia embrouillé est également érroné. Cela interdit l'accès au segment de contenu multimédia, et son jeu en clair par l'appareil multimédia.

L'acquisition légitime, par le client du système, du droit de jouer le contenu, consiste généralement en l'achat d'abonnement ou de séance qui permettent de rémunérer le service de fourniture des contenus multimédia protégés ainsi que les ayants droit de ces contenus.

Des services, dits pirates, sont donc proposés, qui visent à offrir l'accès aux contenus multimédia protégés à des tarifs inférieurs, notamment au mépris des droits des ayants droit. Par exemple, des services pirates dits de partage de cartes, sont connus.

Un service de partage de cartes est rendu par un système de partage de cartes comportant typiquement un serveur de partage de cartes relié par un réseau de communication bidirectionnelle, dit réseau de partage de cartes, à au moins un terminal, dit partageant, muni d'une carte. Ce terminal partageant a légitimement acquis le droit de jouer un contenu multimédia protégé, et reçu en réponse la clé d'exploitation nécessaire pour déchiffrer le cryptogramme du mot de contrôle, afin d'accéder à ce contenu.

Le système de partage de cartes offre d'accéder illégitimement à ce contenu, à un terminal, dit requérant, qui n'a pas légitimement acquis le droit de le jouer, ni reçu en réponse la clé d'exploitation nécessaire pour déchiffrer le cryptogramme d'un mot de contrôle pour accéder à ce contenu.

Pour bénéficier de cet accès illégitime, le terminal requérant doit se connecter d'une part au système de fourniture de contenus multimédia protégés et d'autre part au serveur de partage de cartes. Du premier, il reçoit un segment du contenu, synchronisé avec un ECM comportant un cryptogramme d'un mot de contrôle nécessaire pour accéder à ce segment. Au second, il transmet l'ECM reçu. Le serveur de partage de cartes recherche alors un terminal partageant disponible, et lui transmet l'ECM. La recherche d'un terminal partageant disponible repose sur la mise en œuvre d'un protocole de partage, qui permet de gérer l'accès et les priorités d'accès aux terminaux partageants et cartes partagées dans le réseau de partage de cartes en fonction de l'état de ce réseau et de sa charge. Un terminal partageant est ici dit disponible s'il l'est lui-même et s'il est muni d'une carte elle-même disponible. Le terminal partageant disponible trouvé transmet alors l'ECM à sa carte disponible, également dite carte partagée, laquelle déchiffre alors le cryptogramme du mot de contrôle. Puis la carte partagée retourne le mot de contrôle déchiffré au terminal partageant disponible trouvé, qui le retourne au serveur de partage de cartes, lequel le retourne à son tour au terminal requérant. Le terminal requérant est ainsi en mesure de désembrouiller le segment pour l'obtenir en clair, c'est-à-dire d'y accéder, puis de le transmettre à un appareil multimédia afin qu'il le joue.

Diverses actions peuvent être menées pour lutter contre ce type de services pirates. Par exemple, des actions de communication dissuasive consistant à indiquer à leurs parties prenantes l'illégalité de leurs activités et les risques qu'ils encourent en les mettant en œuvre, ainsi qu'à requérir qu'ils y mettent fin. Sont également possibles, la mise en œuvre de contremesures techniques, visant à perturber le fonctionnement du service, ou des actions judiciaires, visant à obtenir la condamnation desdites parties prenantes par des tribunaux. Dans tous les cas, il est important, pour préparer de telles actions, de pouvoir identifier les cartes partagées, c'est-à-dire associées aux terminaux partageants, ces terminaux ou leurs titulaires.

Des procédés permettant d'identifier des cartes partagées sont connus. Un tel procédé est mis en œuvre grâce à un dispositif d'identification connecté au serveur de partage de cartes de la même façon qu'un terminal requérant.

De façon à identifier des cartes partagées du système de partage de cartes, le dispositif d'identification calcule un ECM, dit ECM d'identification, comportant un cryptogramme d'un mot de contrôle et une commande d'identification. Puis, le dispositif d'identification transmet l'ECM d'identification au serveur de partage de cartes.

Le serveur de partage de cartes recherche alors un terminal partageant disponible, puis lui transmet l'ECM d'identification. Le terminal partageant disponible trouvé transmet à son tour l'ECM d'identification à sa carte disponible, également dite carte partagée.

La carte partagée déchiffre alors le cryptogramme de mot de contrôle avec la clé d'exploitation en cours d'utilisation par le système de fourniture de contenus multimédia protégés. Puis, la carte disponible calcule aussi, en réponse à la commande d'identification et en fonction d'un identifiant enregistré dans sa mémoire, une donnée d'identification qui permet de calculer cet identifiant. La carte partagée retourne ensuite la donnée d'identification au terminal partageant, qui la retourne à son tour au serveur de partage, lequel la retourne enfin au dispositif d'identification.

Le dispositif d'identification détermine alors, en fonction de la donnée d'identification, l'identifiant de la carte partagée, puis le mémorise.

Ces procédés connus présentent l'inconvénient selon lequel ils ne permettent pas d'identifier l'ensemble des cartes partagées mises en œuvre dans le réseau de partage de cartes. Le dispositif d'identification, qui accède au système de partage de cartes comme tout terminal client, n'a en effet généralement pas accès à l'ensemble de ces cartes. Au contraire, ses ECM d'identification sont même généralement orientés de façon récurrente, par le protocole de partage mis en œuvre par le serveur de partage, vers l'une ou l'autre d'un même ensemble restreint de cartes partagées.

De l'état de la technique est également connu des documents US 2013/031576 A1 et US 2009/323949 A1.

L'invention vise a remédier à cet inconvénient des procédés connus, et plus particulièrement à augmenter le nombre de cartes partagées identifiées dans un réseau de partage de cartes, et cela tout en restant le plus discret possible.

L'invention a ainsi pour objet un procédé d'identification de processeurs de sécurité, dans un système de fourniture de contenus multimédia protégés, conforme à la revendication 1.

Dans un tel procédé, la suspension momentanée du premier processeur de sécurité après qu'il ait été identifié, permet d'identifier le deuxième processeur de sécurité, plus probablement et probablement plus rapidement que si le premier était resté actif. Un tel procédé tend donc à permettre de maximiser le nombre des processeurs de sécurité partagés identifiés dans un réseau de partage.

De plus, puisque le premier processeur de sécurité est de nouveau basculé vers son état actif après que le second processeur de sécurité ait été identifié, il est plus difficile pour le serveur de partage de détecter la mise en œuvre de ce procédé. En effet, il est difficile, voire impossible, de distinguer un arrêt accidentel du fonctionnement du premier processeur de sécurité d'un arrêt volontairement provoqué par le procédé revendiqué. A l'inverse, si le premier processeur de sécurité n'était pas basculé à nouveau vers son état actif, alors le nombre de processeurs de sécurité partagés qui s'arrêteraient de fonctionner augmenterait continûment lors de la mise en œuvre du procédé d'identification. Une telle augmentation continue du nombre de processeurs de sécurité partagés qui s'arrêtent de fonctionner peut facilement être distinguée d'un arrêt accidentel de quelques processeurs de sécurité. Ainsi, il serait possible pour le serveur de partage de détecter la mise en œuvre du procédé d'identification suffisamment tôt pour empêcher l'identification des autres processeurs de sécurité partagés.

Les modes de réalisation de ce procédé peuvent comporter une ou plusieurs des caractéristiques des revendications dépendantes de procédé d'identification de processeurs de sécurité.

Ces modes de réalisation de ce procédé présentent en outre les avantages suivants :
- L'identification, successivement, de chacun des processeurs de sécurité d'un premier groupe, puis la suspension de ce premier groupe de processeurs de sécurité, permet d'augmenter le nombre de processeurs de sécurité identifiés, avant de les suspendre ;
- L'enregistrement d'un identifiant du premier groupe dans la mémoire de chacun des processeurs de sécurité de ce premier groupe permet de suspendre ou rétablir chacun des processeurs de sécurité de ce premier groupe au moyen d'une même commande de suspension ou de rétablissement ;
- La transmission d'une commande, par la tête de réseau, au moyen d'un message de contrôle d'accès comportant un cryptogramme d'un mot de contrôle, rend très difficile le filtrage par les terminaux pirates de ces commandes. En effet, les processeurs de sécurité utilisés dans ces terminaux pirates ont besoin de les traiter pour offrir l'accès au contenu.
- La mise en œuvre de l'étape g) seulement quand une condition est satisfaite par un nombre de processeurs de sécurité du premier groupe de processeurs de sécurité, permet d'automatiser et d'optimiser la formation de ce premier groupe en fonction de l'évolution du processus temporel d'identification de processeurs de sécurité.
- La mise en œuvre de l'étape j) seulement quand une condition est satisfaite par un nombre de processeurs de sécurité nouvellement identifiés depuis la dernière mise en œuvre de l'étape g) pour le premier processeur de sécurité, permet d'automatiser et d'optimiser la détermination du moment du rétablissement du premier processeur de sécurité en fonction de l'évolution du processus temporel d'identification de processeurs de sécurité.
- Le calcul, par la tête de réseau, du deuxième message de contrôle d'accès ou du cryptogramme de mot de contrôle qu'il comporte, permet de diminuer la charge de calcul du dispositif d'identification ainsi que son coût.

L'invention a également pour objet des supports d'enregistrement d'informations conformes aux revendications 8, 9 et 10, comportant des instructions pour la mise en œuvre d'étapes du procédé ci-dessus, lorsque ces instructions sont exécutées par un microprocesseur.

L'invention a également pour objet une tête de réseau conforme à la revendication 11.

L'invention a également pour objet un processeur de sécurité conforme à la revendication 12.

L'invention a enfin pour objet un dispositif d'identification conforme à la revendication 13.

L'invention sera mieux comprise à la lecture de la description qui va suivre, donnée uniquement à titre d'exemple non limitatif, et faite en référence aux dessins sur lesquels :
- la figure 1 est une représentation schématique de l'architecture d'un système d'identification de cartes partagées selon l'invention,
- la figure 2 est une représentation schématique d'un processeur de sécurité utilisé dans le système de la figure 1, et
- la figure 3 est une représentation schématique d'un procédé d'identification de cartes partagées selon l'invention.

Dans ces figures, les mêmes références sont utilisées pour désigner les mêmes éléments.

Dans la suite de cette description, les caractéristiques bien connues de l'homme du métier ne sont pas décrites en détail.

La description qui suit est faite dans le cas particulier où le processeur de sécurité est une carte à puce. Toutefois, tout ce qui est décrit dans ce cas particulier s'applique aux autres formes possibles d'implémentation d'un processeur de sécurité. En particulier, cela s'applique au cas où le processeur de sécurité est implémenté dans chaque terminal sous la forme un composant électronique inamovible ou sous la forme d'un module logiciel exécuté par un microprocesseur du terminal.

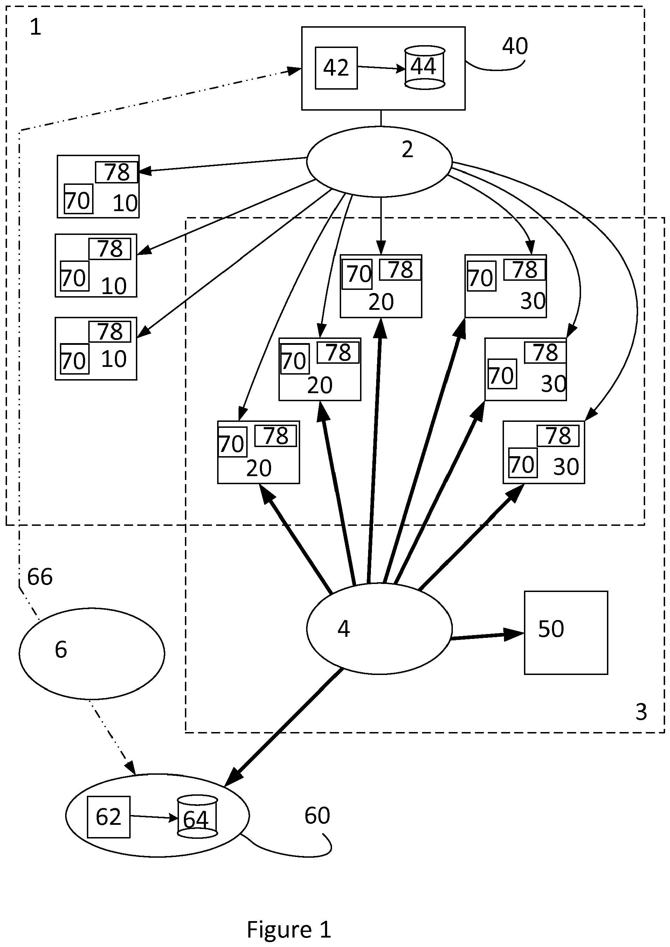

La figure 1 représente un système d'identification de cartes. Ce système comprend un système 1 de fourniture de contenus multimédia protégés, un système 3 de partage de cartes, et un dispositif 60 d'identification de cartes.

Le système 1 comprend une pluralité, typiquement des milliers, des dizaines ou des centaines de milliers, et au plus quelques millions de terminaux 10, 20, 30 mécaniquement indépendants les uns des autres, et reliés, par l'intermédiaire d'un réseau 2, à une tête 40 de réseau.

Le réseau 2, dit réseau de fourniture de contenus multimédia protégés, est un réseau grande distance de distribution d'informations permettant d'établir une liaison de communication point-à-multipoints entre la tête 40 et les terminaux 10, 20, 30. Par exemple, le réseau 2 est un réseau de diffusion par satellite ou par câble, ou la toile d'araignée mondiale plus connue sous le terme de « réseau Internet ».

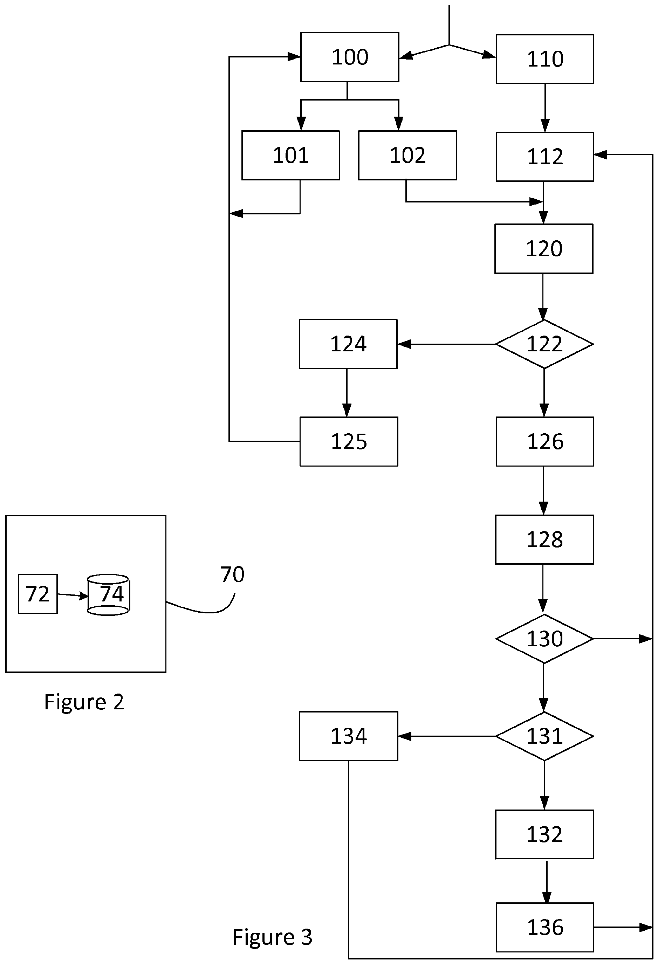

La tête 40 est apte à protéger un contenu multimédia, et à le transmettre, sur le réseau 2, aux terminaux 10, 20, 30. A cet effet la tête 40 comporte un microprocesseur 42 programmable et une mémoire 44. Le microprocesseur 42 est apte à exécuter des instructions enregistrées dans la mémoire 44. Typiquement, il s'agit d'un microprocesseur tel qu'un microprocesseur généraliste de la société Intel, ou de la société ARM. Plus généralement, il s'agit par exemple de tout microprocesseur apte à mettre en œuvre un système d'exploitation Linux ou Windows. La mémoire 44 comporte des instructions nécessaires à l'exécution du procédé de la figure 3.

Un terminal est apte à accéder à un contenu multimédia protégé transmis sur le réseau 2, par la tête 40, en vue de le jouer. A cet effet, au moins les terminaux 10 et 30 comportent une carte à puce 70. Chaque carte 70 est apte à mémoriser la clé d'exploitation, ainsi qu'à traiter les ECM et en particulier à déchiffrer les cryptogrammes de mots de contrôle. Un exemple de réalisation de la carte 70 est décrit plus en détail en référence à la figure 2.

Au moins les terminaux 10 et 20 comportent par ailleurs chacun un désembrouilleur 78, c'est-à-dire un circuit électronique apte à, ou programmé pour, désembrouiller le contenu multimédia avec le mot de contrôle reçu.

Par la suite, on distingue parmi l'ensemble des terminaux du système 1, trois groupes distincts de terminaux, à savoir :
- un premier groupe comportant les terminaux utilisés légalement et appelés « terminaux autorisés »,
- un deuxième groupe comportant les terminaux appelés « terminaux requérants », et
- un troisième groupe comportant les terminaux appelés « terminaux partageants ». Les terminaux des premier, deuxième et troisième groupes portent chacun les références numériques, respectivement, 10, 20 et 30.

Chaque terminal 10 acquiert légitimement le droit de jouer le contenu multimédia protégé, et reçoit en réponse la clé d'exploitation nécessaire pour y accéder. La clé d'exploitation est contenue dans la carte 70 de ce terminal 10. Les terminaux 10 sont typiquement les plus nombreux dans le système 1.

Les terminaux 20 sont généralement identiques aux terminaux autorisés 10. Un terminal 20 n'acquiert pas le droit de jouer le contenu multimédia protégé. Il n'a donc pas à être apte à mémoriser la clé d'exploitation, ni à traiter les ECM, et peut donc par exemple être dépourvu de carte. Ici, les terminaux 20 sont chacun équipé d'une carte 70 dépourvue de la clé d'exploitation nécessaire pour accéder au contenu multimédia. Un terminal 20 est par contre apte à utiliser un mot de contrôle pour désembrouiller le contenu multimédia en vue de le jouer. Par contre, contrairement aux terminaux 10, pour pallier à l'absence de la clé d'exploitation requise, les terminaux 20 font partie du système 3 de partage de cartes de manière à pouvoir accéder illégalement au contenu multimédia protégé.

Les terminaux 30 font partie du système 1 de fourniture de contenus multimédia protégés, et du système 3 de partage de cartes. Un terminal 30 est en principe identique à un terminal 10. De la même façon qu'un terminal 10, il acquiert légitimement le droit de jouer le contenu multimédia protégé, et reçoit en réponse la clé d'exploitation nécessaire pour y accéder. La clé d'exploitation est contenue dans la carte 70 de ce terminal 30. Le système de partage de cartes ne requiert cependant pas que ce terminal 30 accède effectivement lui-même au contenu en vue de le jouer. Il peut donc par exemple être dépourvu de désembrouilleur propre à désembrouiller le contenu multimédia.

Le système 3 de partage de cartes comprend les terminaux 20, 30 et au moins un serveur 50 de partage de cartes relié, par l'intermédiaire d'un réseau 4, à chacun des terminaux 20, 30. Pour simplifier la figure 1, seul un serveur 50, et seuls des terminaux 20, 30 directement reliés à ce serveur, y sont représentés. Ces terminaux 30 sont généralement au moins dix fois moins nombreux que les terminaux 20, et moins de cent mille. Ils peuvent être plusieurs dizaines, centaines ou, typiquement, plusieurs milliers ou dizaines de milliers.

Le réseau 4, dit réseau de partage de cartes, est un réseau grande distance de distribution d'informations permettant d'établir une liaison de communication point-à-point entre le serveur 50 et chacun des terminaux 20, 30. Par exemple, le réseau 4 est la toile d'araignée mondiale plus connue sous le terme de « réseau Internet ».

Le dispositif 60 est relié, d'une part à la tête 40 par une liaison point-à-point 66 établie dans un réseau 6, et d'autre part au serveur 50 par une liaison point-à-point établie dans le réseau 4 de partage. Le réseau 6, dit réseau d'identification, est tout réseau de communication, local ou grande distance, privé ou public, permettant d'établir une telle liaison. Le dispositif 60 comporte un microprocesseur 62 programmable et une mémoire 64. Le microprocesseur 62 est apte à exécuter des instructions enregistrées dans la mémoire 64. La mémoire 64 comporte des instructions nécessaires à l'exécution du procédé de la figure 3.

La figure 2 représente plus en détail la carte 70. Celle-ci est apte à être insérée dans le terminal et, en alternance, retirée de ce terminal par un utilisateur. Elle comporte un microprocesseur électronique 72 programmable et une mémoire 74. Le microprocesseur 72 est apte à exécuter des instructions enregistrées dans la mémoire 74. La mémoire 74 comporte les instructions nécessaires à l'exécution du procédé de la figure 3. Dans certains cas, la mémoire 74 peut également contenir la clé d'exploitation légitimement ou non acquise par le terminal. La mémoire 74 comporte aussi un identifiant de la carte 70 qui permet de la distinguer de toutes les autres cartes 70 utilisées dans le système 1.

Ici, pour la carte 70 et la tête 40, seules les différences par rapport à une carte à puce conventionnelle et à une tête de réseau conventionnelle sont décrites en détail. Pour les informations concernant une carte à puce conventionnelle, une tête de réseau conventionnelle, un serveur de partage de cartes, ou un dispositif d'identification, le lecteur peut aussi se référer à l'état de l'art décrit dans l'introduction de cette demande de brevet.

Le fonctionnement du système de la figure 1 va maintenant être décrit en référence au procédé de la figure 2.

Le procédé débute par une étape 100 lors de laquelle la tête 40 transmet sur une liaison point-à-multipoint établie avec les terminaux 10, 20, 30 dans le réseau 2, un contenu multimédia protégé, synchronisé avec un ECM, noté par la suite ECM₁. Par exemple, le contenu multimédia protégé est multiplexé avec le message ECM₁. Le message ECM₁ comporte un cryptogramme d'un mot de contrôle nécessaire à tout terminal pour accéder à un segment du contenu multimédia.

Suite à cette transmission, les terminaux 10, 20, 30 reçoivent le segment du contenu multimédia protégé, synchronisé avec le message ECM₁.

Ensuite, lors d'une étape 101, chaque terminal autorisé 10 traite le message ECM₁ pour accéder au segment du contenu multimédia protégé. A cet effet, ce terminal 10 démultiplexe le contenu multimédia protégé et le message ECM₁ puis transmet le message ECM₁ à la carte 70 qui est insérée dans ce terminal. La carte 70 extrait du message ECM₁ le cryptogramme du mot de contrôle, déchiffre ce cryptogramme avec la clé d'exploitation mémorisée dans la mémoire 74 pour obtenir le mot de contrôle déchiffré. Ensuite, la carte 70 transmet le mot de contrôle ainsi déchiffré au désembrouilleur 78 de ce terminal 10. Puis, le désembrouilleur 78 du terminal 10 désembrouille le segment du contenu multimédia protégé avec le mot de contrôle déchiffré reçu. Ce segment désembrouillé est ensuite joué par un lecteur multimédia raccordé au terminal 10. Cette étape 101 est réitérée pour chaque segment embrouillé du contenu multimédia transmis par la tête 40 sur le réseau 2.

En parallèle, lors d'une étape 102, chaque terminal requérant 20 démultiplexe le contenu multimédia protégé et le message ECM₁. Toutefois, contrairement au terminal 10, le terminal 20 n'utilise pas sa carte 70 pour déchiffrer le cryptogramme du mot de contrôle contenu dans le message ECM₁ pour accéder au segment du contenu multimédia protégé.

Au contraire, lors de l'étape 102, le terminal requérant 20 transmet le message ECM₁ au serveur 50 sur une liaison point-à-point établie dans le réseau de partage 4.

Lors d'une étape 120, le serveur 50 met en œuvre, en réponse à la réception du message ECM₁ un protocole de partage pour rechercher un terminal partageant 30 disponible. Le terminal partageant 30 trouvé est muni d'au moins une carte 70 disponible, également dite carte partagée. Le serveur 50 transmet le message ECM₁ au terminal partageant 30 trouvé. Le terminal partageant 30 trouvé transmet lui-même le message ECM₁ à sa carte 70 partagée. La carte 70 partagée déchiffre le cryptogramme du mot de contrôle contenu dans le message ECM₁ pour obtenir le mot de contrôle déchiffré.

Puis, lors d'une étape 122, la carte 70 partagée détermine si le message ECM1 comporte une commande d'identification.

Ici, le message ECM₁ ne comporte pas de commande d'identification. Par conséquent, à l'issue de l'étape 122, le procédé se poursuit par une étape 124. Lors de l'étape 124, la carte 70 partagée renvoie le mot de contrôle déchiffré vers le terminal partageant 30, qui le renvoie au serveur 50, lequel le renvoie à son tour vers le terminal requérant 20 qui a transmis le message ECM₁ qui contenait le cryptogramme de ce mot de contrôle.

Lors d'une étape 125, le terminal 20 reçoit le mot de contrôle déchiffré et le transmet à son désembrouilleur 78. Son désembrouilleur 78 désembrouille alors le segment correspondant du contenu multimédia protégé avec ce mot de contrôle déchiffré par le terminal 30. Ensuite, le procédé retourne à l'étape 100 et les étapes 102 à 125 sont réitérées pour la cryptopériode suivante du contenu multimédia. Le terminal requérant 20 peut ainsi accéder au contenu multimédia protégé sans en avoir acquis le droit.

Parallèlement aux étapes 100 à 102, des étapes 110 et 112 sont mises en œ uvre.

Lors de l'étape 110, le dispositif 60 d'identification est connecté d'une part à la tête 40 au moyen de la liaison 66, et d'autre part au serveur 50 au moyen d'une liaison point-à-point établie dans le réseau de partage 4.

Ensuite, lors de l'étape 112, le dispositif 60 d'identification calcule un ECM d'identification, noté par la suite ECM₂. Le message ECM₂ est un message de structure identique à celle des ECM classiquement calculés par la tête 40. Le message ECM₂ comporte en particulier un cryptogramme d'un mot de contrôle. Le mot de contrôle dont le cryptogramme est contenu dans le message ECM₂ n'est cependant pas utilisé par la tête 40 pour embrouiller un segment du contenu multimédia protégé. Par exemple, ce mot de contrôle et son cryptogramme sont respectivement calculés, exactement comme par la tête 40, par tirage d'un aléa et par chiffrement de cet aléa avec la clé d'exploitation en cours d'utilisation par la tête 40. A la différence d'un ECM calculé par la tête 40, le message ECM₂ comporte en outre une commande d'identification. L'insertion de la commande d'identification ne distingue pas la structure du message ECM₂ de celle d'un ECM calculé par la tête 40. Par exemple, elle consiste en le positionnement d'un drapeau prédéterminé dans une section confidentielle du message. Le message ECM₂ ne peut alors, par analyse de sa structure, pas être distingué d'un ECM calculé par la tête 40 comme le message ECM₁. Dès lors, il ne peut pas être filtré par les terminaux 20, 30 ou par le serveur 50 afin d'empêcher son traitement par une carte à puce partagée d'un des terminaux 30.

Connecté au réseau 4 de partage comme un terminal requérant 20, le dispositif 60 transmet ensuite le message ECM₂ au serveur 50. Le serveur 50 traite alors le message ECM₂ de façon identique à ce qui a été décrit pour le message ECM₁ et, en particulier, met en œuvre les étapes 120 et 122.

Toutefois, lors de l'étape 122, la carte 70 partagée détecte la présence de la commande d'identification dans le message ECM₂, puis procède alors à une étape 126 au lieu de procéder à l'étape 124.

Lors de l'étape 126, la carte 70 partagée calcule, en fonction de son identifiant enregistré dans sa mémoire 74, une donnée d'identification qui permet de déterminer cet identifiant. Par exemple, la carte 70 partagée combine son identifiant avec le mot de contrôle déchiffré qu'elle a obtenu lors de l'étape 120. La structure de la donnée d'identification est identique à la structure d'un mot de contrôle déchiffré. Pour cela, à titre d'illustration, cette combinaison est une opération de chiffrement de l'identifiant avec le mot de contrôle déchiffré obtenu. Plus particulièrement, ici, cette opération de chiffrement est une opération de disjonction logique, également dite « ou exclusif » ou XOR (« eXclusive OR », en anglais). Ainsi, dans ce mode de réalisation, la donnée d'identification est obtenue en réalisant un « ou exclusif » entre l'identifiant de la carte 70 partagée et le mot de contrôle déchiffré. Puis, la carte 70 partagée renvoie la donnée d'identification vers le terminal partageant 30 de façon identique à ce qui a été décrit, en référence à l'étape 124, pour un mot de contrôle déchiffré. Puisque la structure de la donnée d'identification est identique à celle d'un mot de contrôle déchiffré, le terminal 30 et le serveur 50 sont incapables de faire la distinction entre les deux. Dès lors, ils traitent la donnée d'identification de la même façon qu'un mot de contrôle déchiffré. Ainsi, le terminal 30 la renvoie au serveur 50, lequel la renvoie à son tour vers le dispositif 60.

Ensuite, lors d'une étape 128, le dispositif 60 calcule, en fonction de la donnée d'identification, l'identifiant de la carte 70 partagée, puis le mémorise dans la mémoire 64. A cet effet, il obtient d'abord le mot de contrôle déchiffré en déchiffrant le cryptogramme inséré dans le message ECM₂ lors de l'étape 112 au moyen de la clé d'exploitation en cours d'utilisation par le système 1. Puis, le dispositif 60 combine la donnée d'identification avec le mot de contrôle ainsi déchiffré de manière à obtenir l'identifiant de la carte 70 partagée. Ici, cette combinaison est une opération de déchiffrement de la donnée d'identification avec le mot de contrôle déchiffré. Plus particulièrement, le dispositif 60 réalise un « ou exclusif » entre la donnée d'identification retournée par le serveur 50 et le mot de contrôle déchiffré. Ce qui lui permet d'obtenir l'identifiant de la carte 70 partagée. L'étape 128 termine ainsi le procédé d'identification de la carte 70 partagée.

Les étapes 112 à 128 sont ensuite réitérées de façon à identifier d'autres cartes partagées dans le système 3 de partage de cartes. En effet, si plusieurs terminaux partageants 30 sont disponibles dans le système 3, chacun de ces terminaux 30 est susceptible d'être trouvé par le serveur 50 lors de l'étape 120. Ainsi, après l'identification d'une première carte partagée, lors d'une mise en œuvre ultérieure de l'étape 120, une deuxième carte partagée pourra être identifiée. La réitération des étapes 112 à 128 permet donc d'identifier successivement plusieurs cartes partagées dans le système 3 de partage de cartes.

Par ailleurs, dans un état à peu près stable du système 3 de partage et de la charge du réseau 4, les terminaux partageants 30 disponibles trouvés lors de l'étape 120 sont presque toujours les mêmes. Par conséquent, dans cet état à peu près stable, les cartes 70 partagées utilisées lors des étapes 120 ,122, 124 et 126 restent à peu près les mêmes, et sont affectées de façon récurrente au traitement des ECM transmis par les terminaux 20 et le dispositif 60. Dans cet état à peu près stable, les ECM d'identification tendent donc à être transmis de façon récurrente à un groupe limité de terminaux partageants 30 et donc à un nombre limité de cartes 70 partagées. Ainsi, si à l'issue de l'étape 128, le procédé retourne systématiquement directement à l'étape 112, seul un groupe restreint de cartes 70 partagées est identifié.

Plus précisément, au début de ces itérations des étapes 112 à 128, le nombre de nouvelles cartes 70 partagées identifiées croit rapidement et le procédé d'identification est donc efficace. Puis, au fur et à mesure des réitérations des étapes 112 à 128, le message ECM₂ est de plus en plus fréquemment dirigé par le serveur 50 vers une carte 70 partagée qui a déjà été identifiée. Ainsi, au fur et à mesure que le temps s'écoule, le nombre de nouvelles cartes 70 partagées identifiées par unité de temps T diminue. Autrement dit, si rien n'est fait, l'efficacité du procédé d'identification diminue au cours temps. Cette diminution de l'efficacité du procédé d'identification se traduit par une augmentation du temps et de l'effort (typiquement le nombre d'ECM d'identification à soumettre au serveur 50) nécessaires à l'identification de nouvelles cartes 70 partagées.

Pour remédier à cet inconvénient, dans le procédé décrit ici, l'étape 128 est suivie d'une étape 130. Lors de l'étape 130, le dispositif 60 détermine si le procédé d'identification est, ou non, toujours efficace. A cet effet, le dispositif 60 construit un indicateur d'efficacité du procédé d'identification. Lorsque la valeur de cet indicateur satisfait une ou plusieurs conditions prédéterminées qui caractérisent une baisse de l'efficacité du procédé d'identification, le dispositif 60 procède à une étape 131. Dans le cas contraire, l'efficacité du procédé d'identification est considérée comme toujours satisfaisante, et le dispositif 60 poursuit donc le procédé sans agir sur l'état du système 3 de partage, en procédant directement à une nouvelle mise en œuvre de l'étape 112 et donc des étapes 112 à 130.

Par exemple, l'indicateur d'efficacité est ici le nombre NsC des cartes 70 partagées nouvellement identifiées au cours d'une période Tₛ qui est une fenêtre glissante de durée prédéterminée qui se termine à l'instant courant. La condition qui déclenche l'exécution de l'étape 131 est ici la condition (1) suivante : NsC ≤ S_{NsC}, où S_{NsC} est un seuil prédéterminé.

Si la condition (1) n'est pas satisfaite, le dispositif 60 déclenche donc directement une nouvelle mise en œuvre de l'étape 112 sans passer par l'étape 131.

Si la condition (1) est satisfaite, le dispositif 60 procède à une mise en œuvre de l'étape 131.

Lors de l'étape 131, le dispositif 60 teste la valeur d'un marqueur de l'état du procédé d'identification. Ce marqueur est enregistré dans sa mémoire 64. Selon la valeur de ce marqueur, le dispositif 60 procède à une étape 132 et, en alternance, à une étape 134. Lors de ces étapes 132, 134, le dispositif 60 agit sur l'état du système 3 de partage afin de provoquer une hausse de l'efficacité du procédé d'identification. Par exemple, ici, le marqueur prend la valeur « vraie » si un groupe de cartes partagées précédemment identifiées est suspendu. Dans le cas contraire, le marqueur prend la valeur « faux ». Si la valeur du marqueur est égale à « faux », le dispositif 60 exécute l'étape 132. Dans le cas contraire, il exécute l'étape 134.

Lors de l'étape 132, le dispositif 60 crée un groupe Gᵢ contenant les identifiants des cartes 70 partagées nouvellement identifiées. Les cartes partagées nouvellement identifiées sont celles qui ont été identifiées lors des itérations successives des étapes 112 à 128 depuis la dernière mise en œuvre de l'étape 134, ou depuis l'activation du procédé si l'étape 134 n'a pas déjà été mise en œuvre. Ensuite, sur requête du dispositif 60, la tête 40 transmet une commande de constitution de groupe à chacune des cartes 70 dont l'identifiant appartient au groupe Gᵢ. Cette commande comporte un identifiant du groupe Gᵢ. Cet identifiant du groupe Gᵢ permet de distinguer le groupe Gᵢ constitué lors de cette exécution de l'étape 132 d'éventuels groupes constitués lors d'exécutions précédentes de cette étape 132. En réponse, chacune des cartes 70 appartenant au groupe Gᵢ, mémorise cet identifiant du groupe Gᵢ dans sa mémoire 74.

La commande de constitution de groupe est transmise aux terminaux 30 par l'intermédiaire du réseau 2. Préférentiellement, la commande de constitution de groupe est transmise dans un message ECM. Typiquement, la commande de constitution de groupe est insérée dans une section confidentielle de longueur prédéterminée de l'ECM. Ainsi, la présence de cette commande ne peut pas être détectée par les terminaux 20, 30 et le serveur 50 notamment en analysant la structure du message ECM. Ces messages ECM ne peuvent donc pas être filtrés puis ignorés par le système 3 de partage. Le message ECM comporte alors aussi l'identifiant de la carte 70 qui doit enregistrer l'identifiant Gᵢ dans sa mémoire 74. Les ECM étant les seuls messages qui ne peuvent pas être filtrés car les terminaux partageants 30 ont besoin de les traiter pour offrir l'accès au contenu, ils permettent donc d'assurer au mieux la transmission de la commande de constitution de groupe.

Chaque carte 70 partagée d'un terminal 30 qui reçoit un ECM vérifie si cet ECM comporte un identifiant de carte qui correspond à son identifiant de carte enregistré dans sa mémoire 74. Dans la négative, la carte 70 exécute les étapes 120 et 122 comme précédemment décrit. Si, au contraire, la carte 70 détecte que le message ECM reçu comporte un identifiant de carte qui correspond à l'identifiant de carte enregistré dans sa mémoire 74, alors en plus d'exécuter les étapes 120 et 122, la carte enregistre dans sa mémoire 74 l'identifiant du groupe Gᵢ qui est contenu dans cet ECM.

En fonction de la cryptopériode du système 1, de la longueur de la section confidentielle d'un ECM, et du nombre des cartes 70 nouvellement identifiées, plusieurs commandes de constitution de groupe, donc plusieurs ECM, et donc plusieurs cryptopériodes, peuvent être nécessaires à la constitution du groupe.

Une fois que l'identifiant Gᵢ a été enregistré dans la mémoire 74 de chacune des cartes 70 dont l'identifiant appartient au groupe Gᵢ constitué, lors d'une étape 136, sur requête du dispositif 60, à un instant t₁, la tête 40 transmet, une commande de suspension à chacune des cartes 70. Cette commande, dite de groupe, comporte l'identifiant Gᵢ. De plus, cette commande est dépourvue d'identifiant individuel de cartes 70 partagées. Elle est transmise par la tête 40, sur le réseau 2, à l'ensemble des cartes 70.

Préférentiellement, la commande de suspension de groupe est insérée dans une section confidentielle d'un ECM, comme cela a été décrit plus haut pour la commande de constitution de groupe.

Chaque carte 70 partagée d'un terminal 30 qui reçoit un ECM vérifie si cet ECM comporte un identifiant de groupe qui correspond à l'identifiant de groupe enregistré dans sa mémoire 74. Ainsi, ici, un seul ECM suffit dans tous les cas pour s'adresser à l'ensemble des cartes 70 qui appartiennent au même groupe Gᵢ. Si la mémoire 74 de la carte 70 ne comporte pas l'identifiant du groupe Gᵢ, alors elle exécute les étapes 120 et 122 comme précédemment décrit. Si, au contraire, la mémoire 74 de la carte 70 comporte l'identifiant du groupe Gᵢ, alors, elle bascule :
- d'un état actif, dans lequel, en réponse à la réception d'un ECM, elle déchiffre le cryptogramme du mot de contrôle contenu dans l'ECM pour obtenir le mot de contrôle déchiffré, puis retourne le mot de contrôle déchiffré au terminal partageant 30, vers
- un état inactif dans lequel, la carte 70 partagée est indisponible et ne retourne au terminal partageant 30 aucune réponse à la réception d'un ECM dépourvu d'une commande de rétablissement.
Autrement dit, en réponse à la réception de la commande de suspension, les cartes 70 qui appartiennent au groupe Gᵢ, inhibent leurs contributions à l'étape 120 et l'exécution de l'étape 122.

Enfin, lors de l'étape 136, le dispositif 60 réinitialise l'indicateur d'efficacité du procédé d'identification, et affecte au marqueur d'état la valeur « vraie » pour indiquer que le groupe Gᵢ de cartes est actuellement suspendu. Après l'étape 136, le dispositif 60 déclenche une nouvelle mise en œuvre de l'étape 112, et, au-delà une nouvelle série d'itération des étapes 112 à 128.

La suspension de la carte la rendant indisponible, elle permet d'éviter que la même carte soit utilisée pour traiter les ECM d'identification suivants, et donc à nouveau identifiée. Dès lors, à partir de l'instant t₁, d'autres cartes 70 n'appartenant pas au groupe Gᵢ suspendu sont utilisées par le système 3 pour traiter les ECM. Ainsi, à partir de cet instant t₁, les itérations suivantes des étapes 112 à 128 entraînent l'identification de ces autres cartes par le dispositif 60, plus probablement et plus rapidement que si le groupe suspendu ne l'avait pas été. La suspension provoque une augmentation locale de l'efficacité du procédé d'identification, et permet de maximiser le nombre de cartes partagées identifiées par le procédé.

Lors de l'étape 134, sur requête du dispositif 60, la tête 40 transmet, à la carte 70 partagée, une commande de rétablissement. En réponse, la carte 70 partagée bascule de l'état inactif vers l'état actif.

Lors de l'étape 134, à un instant t₂ postérieur à l'instant t₁,

sur requête du dispositif 60, la tête 40 transmet, une commande de rétablissement à chacune des cartes 70 partagées du groupe Gᵢ. Cette commande, dite de groupe, comporte l'identifiant du groupe Gᵢ. Elle est dépourvue d'identifiant individuel pour chacune des cartes 70 du groupe Gᵢ. Elle est transmise par la tête 40, sur le réseau 2 de fourniture, à l'ensemble des cartes 70.

Préférentiellement, la commande de rétablissement de groupe est transmise dans une section confidentielle d'un ECM, comme cela a été décrit plus haut pour la commande de suspension de groupe. Ici, comme pour la commande de suspension, un seul ECM suffit dans tous les cas à cette transmission.

En réponse, chaque carte 70 partagée ayant mémorisé l'identifiant du groupe Gᵢ dans sa mémoire 74 bascule de l'état inactif vers l'état actif.

Enfin, lors de l'étape 134, le dispositif 60 réinitialise l'indicateur d'efficacité et affecte la valeur « faux » au marqueur d'état enregistré dans sa mémoire 64. Après l'étape 134, le dispositif 60 déclenche une nouvelle mise en œ uvre de l'étape 112, et, au-delà une nouvelle série d'itération des étapes 112 à 128

Le rétablissement des cartes suspendues permet de rendre plus difficile pour le serveur 50 la détection de la mise en œuvre du procédé. De plus, le rétablissement des cartes suspendues perturbe une nouvelle fois le fonctionnement du système 3. Ainsi, après l'instant t₂, le dispositif 60 peut identifier rapidement de nouvelles cartes 70 partagées qui n'avaient jamais encore été identifiées jusqu'à présent.

De nombreux autres modes de réalisation de l'invention sont possibles. Par exemple, le système de protection de contenus utilisé est un système de gestion de droits numériques, ou DRM, pour Digital Rights Management, en anglais. La terminologie du domaine des systèmes de gestion de droits numériques est alors utilisée. Le lecteur intéressé pourra par exemple en trouver une présentation plus complète dans les documents suivants :
- concernant l'architecture générale d'un système de DRM : DRM Architecture, Draft version 2.0, OMA-DRM-ARCH-V2_0-20040518-D, Open Mobile Alliance, 18 mai 2004,
- concernant plus particulièrement les licences : DRM Spécification, Draft version 2.1, OMA-TS-DRM-DRM-V2_1-20060523-D, Open Mobile Alliance, 23 mai 2006.

La clé spécifique de chiffrement d'un segment de contenu multimédia est alors dite clé de contenu. La clé nécessaire au déchiffrement du segment chiffré est égale à la clé de contenu à l'aide de laquelle le segment a été chiffré. Le message de contrôle d'accès comportant un cryptogramme d'une clé de contenu est enfin une licence.

Dans un autre mode de réalisation, le contenu est fourni, par le système, protégé par tout autre type de système de protection de contenus, tel par exemple qu'un système de protection de données plus classique ne réalisant pas de gestion de droits d'accès. Le procédé revendiqué s'applique alors à la fourniture des messages nécessaires à l'acheminement des clés de déchiffrement, par exemple.

Dans un autre mode de réalisation, un terminal 30 n'acquiert pas légitimement le droit de jouer le contenu multimédia protégé. Dans ce cas, il peut recevoir les ECM, et donc la clé d'exploitation nécessaire pour y accéder, par exemple du système 3 de partage, via le réseau 4 de partage.

Les terminaux 30 peuvent être incorporés au serveur 50. Dans ce cas, le serveur 50 contient typiquement plusieurs cartes à puce partagées.

Le dispositif 60 peut aussi être incorporé à l'intérieur de la tête 40. Dans ce cas, le réseau 6 et la liaison 66 peuvent être omis.

En variante, lors de l'étape 112, le dispositif 60 transmet, à la tête 40, une requête en réponse à laquelle la tête 40 calcule le message ECM₂, ou le cryptogramme de mot de contrôle qu'il comporte, puis le retourne au dispositif 60.

Dans une autre variante, le dispositif 60 reçoit les cryptogrammes des mots de contrôle transmis par la tête 40 dans des ECM. Dans ce cas, lors de l'étape 112, le cryptogramme du mot de contrôle incorporé dans le message ECM₂ peut être un véritable cryptogramme d'un mot de contrôle utilisé pour embrouiller le contenu multimédia diffusé par la tête 40.

Lors de l'étape 112, la donnée d'identification n'est pas nécessairement construite en utilisant le mot de contrôle. Par exemple, la donnée d'identification qui est retournée par la carte 70 partagée est uniquement construite en fonction de l'identifiant de cette carte. Dans ce cas, lors de l'étape 128, le dispositif 60 n'a pas besoin d'utiliser le mot de contrôle courant ou la clé d'exploitation courante pour déchiffrer la donnée d'identification afin d'obtenir l'identifiant de la carte partagée.

D'autres indicateurs d'efficacité sont possibles. Par exemple, l'indicateur d'efficacité peut être égal à un taux TsC d'identification égal à NsC/Tₛ. La condition testée lors de l'étape 130 est alors par exemple la suivante : TsC < S_{TsC}, où S_{TsC} est un seuil prédéterminé.Dans un autre exemple, l'indicateur d'efficacité est le nombre total N des cartes 70 partagées identifiées depuis la dernière mise en œuvre de l'étape 132 ou de l'étape 134. La condition testée lors de l'étape 130 est alors N ≥ SN, où SN est un seuil prédéterminé. Dans un autre exemple, l'indicateur d'efficacité est le taux global TxC = N/T où T est la durée totale écoulée depuis la dernière mise en œuvre de l'étape 132 ou de l'étape 134. La condition testée lors de l'étape 130 est alors par exemple la suivante : TsC < S_{TxC}, où S_{TxC} est un seuil prédéterminé. Les durées Tₛ et T peuvent aussi être remplacées respectivement par des nombres Nₛₗ et Nₗ prédéterminés d'itérations des étapes 112 à 128 pour calculer les indicateurs NsC et TsC.

Il est aussi possible d'utiliser simultanément plusieurs indicateurs d'efficacité comme, par exemple, les indicateurs NsC et TsC. Dans ce cas, la condition qui déclenche l'exécution de l'étape 132 peut être une condition complexe. Typiquement, une condition complexe est une combinaison de plusieurs sous-conditions reliée les unes aux autres par un opérateur logique « ET », « OU », « XOR ».

Dans un autre mode de réalisation, le choix de l'indicateur d'efficacité du procédé d'identification utilisé lors de l'étape 131 dépend de la valeur du marqueur d'état. Ainsi, la condition pour suspendre des cartes partagées et la condition pour rétablir ces cartes partagées n'est pas nécessairement la même.

Lors de l'étape 132, en variante, la commande de constitution de groupe est transmise au moyen de messages de gestion des titres d'accès, ou EMM (« Entitlement Management Message » en anglais). Elles peuvent également l'être dans tout autre type de message, pré-existant ou spécifique.

Dans un autre mode de réalisation, la constitution du groupe des cartes 70 nouvellement identifiées n'est pas réalisée lors de l'étape 132, mais au fur et à mesure des itérations successives des étapes 112 à 128 depuis la dernière mise en œ uvre de l'étape 134 ou depuis l'activation du procédé si l'étape 134 n'a pas déjà été mise en œuvre. Par exemple, sur requête du dispositif 60, la tête 40 transmet à une carte 70 partagée, dès qu'elle a été identifiée lors d'une itération des étapes 112 à 128, une commande de constitution de groupe de cartes. Cette commande comporte l'identifiant de groupe, affecté par le dispositif 60, audit groupe en cours de constitution. Dans un autre exemple, dès que le nombre de cartes partagées nouvellement identifiées lors d'itérations successives des étapes 112 à 128 dépasse un seuil prédéterminé, sur requête du dispositif 60, la tête 40 transmet à ces cartes 70 partagées, une commande de constitution de groupe pour former un groupe avec ces cartes. Le seuil prédéterminé est par exemple choisi égal au nombre maximal d'identifiants de cartes 70 qu'il est possible d'insérer dans une commande de constitution de groupe qui puisse être contenue dans un unique ECM. Ainsi, le groupe peut systématiquement être constitué en transmettant un seul ECM. La commande de constitution d'un groupe peut aussi être systématiquement envoyée après qu'un intervalle de temps prédéterminé se soit écoulé.

Dans un autre mode de réalisation, avant d'exécuter l'étape 136, l'étape 132 peut être mise en œuvre plusieurs fois pour constituer plusieurs groupes. Dans ce cas, une carte peut éventuellement appartenir à plusieurs de ces groupes constitués ou, au contraire, à un seul de ces groupes constitués. Ensuite, lors de l'exécution suivante de l'étape 136, un seul ou une partie seulement des groupes constitués, ou tous les groupes constitués, sont suspendus. De façon similaire, lors de l'étape 134, un seul ou une partie seulement des groupes de cartes suspendues, ou tous les groupes de cartes suspendues, sont rétablis. Dans un autre mode de réalisation, les étapes 132 puis 136, et l'étape 134, peuvent être mises en œuvre en parallèle et, par exemple, en même temps. Dans ce cas, au moins un groupe de cartes est suspendu, et au moins un groupe différent de cartes est rétabli lors de la même exécution simultanée des étapes 132, 136 et 134.

Dans un autre mode de réalisation, la constitution du groupe des cartes 70 nouvellement identifiées est omise. Dans ce cas, lors de l'étape 132, la tête 40 transmet à chacune des cartes 70 nouvellement identifiées une commande individuelle de suspension. Préférentiellement, cette commande individuelle de suspension est transmise à une carte 70 partagée dans une section confidentielle d'un ECM comme cela a déjà été décrit plus haut pour une commande de constitution de groupe. Dans ce cas, l'ECM comporte l'identifiant de la carte et non pas un identifiant du groupe de cartes à suspendre. Ici, par contre, un ECM suffit alors dans tous les cas à cette transmission. Cette commande de suspension de carte peut cependant aussi être transmise au moyen d'un EMM, ou de tout autre type de message, pré-existant ou spécifique. De la même façon, lors de l'étape 134, la tête 40 transmet à chacune des cartes 70 nouvellement identifiées une commande individuelle de rétablissement de carte. Préférentiellement, la commande individuelle de rétablissement de carte est transmise à une carte 70 partagée dans une section confidentielle d'un ECM. Par exemple, la commande individuelle de rétablissement est identique à la commande de rétablissement précédemment décrite sauf que l'ECM comporte un identifiant de la carte à la place de l'identifiant de groupe. Dès lors un seul ECM suffit dans tous les cas à cette transmission. Cette commande de suspension de carte peut cependant aussi être transmise au moyen d'un EMM, ou de tout autre type de message, pré-existant ou spécifique.

Lors de l'étape 134 ou 136, en variante, la commande de suspension ou de rétablissement de groupe est transmise au moyen d'EMM, ou de tout autre type de message, pré-existant ou spécifique.

## Revendications

1. Procédé d'identification de processeurs de sécurité, dans un système de fourniture de contenus multimédia protégés, procédé dans lequel :
a) une tête de réseau transmet (100), à un ensemble de terminaux, sur une liaison point-à-multipoint établie dans un premier réseau de communication, un contenu multimédia protégé, synchronisé avec un premier message de contrôle d'accès comportant un cryptogramme d'un mot de contrôle nécessaire à tout terminal pour accéder au contenu multimédia,
b) au moins un terminal, dit requérant, reçoit (100) le premier message de contrôle d'accès, puis le transmet (102), sur un deuxième réseau de communication, à un serveur de partage, lequel serveur de partage transmet (120) le premier message de contrôle d'accès à un premier processeur de sécurité, lequel premier processeur de sécurité déchiffre (120) le cryptogramme du mot de contrôle contenu dans le premier message de contrôle d'accès pour obtenir le mot de contrôle déchiffré, puis renvoie (124) le mot de contrôle déchiffré vers le serveur de partage, qui renvoie (124) à son tour le mot de contrôle déchiffré vers le terminal requérant, le ou les terminaux requérants ne représentant qu'une partie seulement de l'ensemble de terminaux,
c) un dispositif d'identification se connecte (110), d'une part à la tête de réseau et d'autre part au serveur de partage par l'intermédiaire du deuxième réseau de communication,
d) le dispositif d'identification calcule (112) un deuxième message de contrôle d'accès comportant un cryptogramme d'un mot de contrôle et une commande d'identification, puis transmet (112), au serveur de partage, le deuxième message de contrôle d'accès,
e) le serveur de partage transmet (120) le deuxième message de contrôle d'accès, de la même manière que le premier message de contrôle d'accès lors de l'étape b), au premier processeur de sécurité, lequel premier processeur de sécurité calcule (126), en réponse à la commande d'identification reçue et en fonction d'un identifiant de ce premier processeur de sécurité enregistré dans une mémoire du premier processeur de sécurité, une donnée d'identification qui permet de déterminer ledit identifiant, puis transmet (126) la donnée d'identification au serveur de partage, qui la transmet (126) à son tour au dispositif d'identification,
f) le dispositif d'identification détermine (128), en fonction de la donnée d'identification, l'identifiant du premier processeur de sécurité, puis le mémorise (128),
g) sur requête du dispositif d'identification, la tête de réseau transmet (136), au premier processeur de sécurité dont il a mémorisé l'identifiant lors d'une précédente mise en œuvre de l'étape f), une commande de suspension du premier processeur de sécurité, puis le premier processeur de sécurité, en réponse, bascule (136) :
- d'un état actif, dans lequel, en réponse à la réception d'un message de contrôle d'accès, le processeur de sécurité déchiffre le cryptogramme du mot de contrôle contenu dans ledit message pour obtenir le mot de contrôle déchiffré, puis retourne le mot de contrôle déchiffré au serveur de partage, vers
- un état inactif dans lequel, le processeur de sécurité ne retourne au serveur de partage aucune réponse à la réception d'un message de contrôle d'accès, puis,
h) le serveur de partage détecte (120) que le premier processeur de sécurité est dans son état inactif et transmet (120) alors, lors des exécutions suivantes de l'étape b), les messages de contrôle d'accès vers un deuxième processeur de sécurité à la place du premier processeur de sécurité, puis
i) les étapes d) à f) sont alors réitérées avec le deuxième processeur de sécurité à la place du premier processeur de sécurité pour identifier ce deuxième processeur de sécurité,
**caractérisé en ce que**, après l'étape i), le procédé comporte :
j) en réponse à l'identification au moins du deuxième processeur de sécurité, sur requête du dispositif d'identification, la tête de réseau transmet (134), au premier processeur de sécurité, une commande de rétablissement du premier processeur de sécurité, puis le premier processeur de sécurité, en réponse, bascule (134) de l'état inactif vers l'état actif.

2. Procédé selon la revendication 1, dans lequel :
- avant que l'étape g) ne soit mise en œuvre pour l'un quelconque des processeurs de sécurité d'un premier groupe de plusieurs processeurs de sécurité différents auquel appartient le premier processeur de sécurité, ce premier groupe ne comportant qu'une partie des processeurs de sécurité utilisés dans le système de fourniture de contenus multimédia :
- les étapes d) à f) sont exécutées pour chacun des processeurs de sécurité de ce premier groupe, puis
- un identifiant de ce premier groupe est enregistré (132) dans la mémoire de chacun des processeurs de sécurité de ce premier groupe, puis
- lors de l'étape g) :
- la commande de suspension transmise (136) par la tête de réseau, est une commande de suspension de l'ensemble des processeurs de sécurité du premier groupe, cette commande de suspension comportant l'identifiant du premier groupe et étant dépourvue d'identifiant individuel pour chaque processeur de sécurité de ce premier groupe,
- cette commande de suspension est transmise (136) à chacun des processeurs de sécurité du premier groupe, puis seul chacun des processeurs de sécurité du premier groupe, en réponse, bascule (136) de l'état actif vers l'état inactif, puis,
- lors de l'étape j) :
- la commande de rétablissement transmise (134) par la tête de réseau, est une commande de rétablissement de l'ensemble des processeurs de sécurité du premier groupe, cette commande de rétablissement comportant l'identifiant du premier groupe et étant dépourvue d'identifiant individuel pour chaque processeur de sécurité de ce premier groupe,
- cette commande de rétablissement est transmise (134) à chacun des processeurs de sécurité du premier groupe, puis seul chacun des processeurs de sécurité du premier groupe, en réponse, bascule (134) de l'état inactif vers l'état actif.

3. Procédé selon la revendication 2, dans lequel l'enregistrement (132) d'un identifiant du premier groupe dans la mémoire de chacun des processeurs de sécurité de ce premier groupe, comporte, préalablement à l'étape g), sur requête du dispositif d'identification, la transmission (132), par la tête de réseau, d'une commande de constitution du premier groupe à chacun des processeurs de sécurité du premier groupe, puis, en réponse, l'enregistrement (132) de l'identifiant du premier groupe dans sa mémoire par chacun des processeurs de sécurité du premier groupe.

4. Procédé selon l'une quelconque des revendications précédentes, dans lequel l'une au moins des commandes transmises (132, 134, 136) par la tête de réseau, l'est dans un message de contrôle d'accès comportant un cryptogramme d'un mot de contrôle et transmis à l'ensemble de terminaux.

5. Procédé selon la revendication 2, dans lequel :
- le dispositif d'identification détermine (130) si une condition choisie dans l'ensemble constitué des conditions suivantes, est vérifiée :
- N est supérieur à un seuil strictement positif prédéterminé, où N est le nombre de processeurs de sécurité constituant le premier groupe de processeurs de sécurité,
- le taux d'identification global N/T est inférieur à un seuil strictement positif prédéterminé, ledit seuil étant une constante ou calculé en fonction d'une valeur initiale dudit taux d'identification global, où T est la durée écoulée depuis la dernière mise en œuvre de l'étape j),
- un nombre n est inférieur à un seuil strictement positif prédéterminé, ledit seuil étant une constante ou calculé en fonction d'une valeur initiale dudit nombre n, où n est le nombre de processeurs de sécurité identifiés lors de la dernière période de durée donnée t inférieure à T écoulée depuis la dernière mise en œuvre de l'étape j),
- un taux d'identification local n/t est inférieur à un seuil strictement positif prédéterminé, ledit seuil étant une constante ou calculé en fonction d'une valeur initiale dudit taux d'identification local, et
- dès que cette condition est satisfaite, en réponse, l'étape g) est mise en œuvre.

6. Procédé selon l'une quelconque des revendications précédentes, dans lequel :
- le dispositif d'identification détermine (130) si une condition choisie dans l'ensemble constitué des conditions suivantes, est satisfaite :
- N est supérieur à un seuil strictement positif prédéterminé, où N est le nombre de processeurs de sécurité nouvellement identifiés depuis la dernière mise en œuvre de l'étape g) pour le premier processeur de sécurité,
- le taux d'identification global N/T est inférieur à un seuil strictement positif prédéterminé, ledit seuil étant une constante ou calculé en fonction d'une valeur initiale dudit taux d'identification global, où T est la durée écoulée depuis la dernière mise en œuvre de l'étape g) pour le premier processeur de sécurité,
- un nombre n est inférieur à un seuil strictement positif prédéterminé, ledit seuil étant une constante ou calculé en fonction d'une valeur initiale dudit nombre n, où n est le nombre de processeurs de sécurité identifiés lors de la dernière période de durée donnée t inférieure à T écoulée depuis la dernière mise en œuvre de l'étape g),
- le taux d'identification local n/t est inférieur à un seuil strictement positif prédéterminé, ledit seuil étant une constante ou calculé en fonction d'une valeur initiale dudit taux d'identification local, et
- dès que cette condition est satisfaite, en réponse, l'étape j) est mise en œuvre.

7. Procédé selon l'une quelconque des revendications précédentes, dans lequel, lors de l'étape d) (112), le dispositif d'identification transmet, à la tête de réseau, une requête en réponse à laquelle la tête de réseau calcule le cryptogramme du mot de contrôle ou le deuxième message de contrôle d'accès puis le renvoie au dispositif d'identification.

8. Support (64) d'enregistrement d'informations d'un dispositif d'identification, **caractérisé en ce qu'**il comporte des instructions pour la mise en œuvre des étapes c), d), f), g), i) et j) d'un procédé conforme à l'une quelconque des revendications précédentes, lorsque ces instructions sont exécutées par un microprocesseur (62).

9. Support (44) d'enregistrement d'informations d'une tête de réseau, **caractérisé en ce qu'**il comporte des instructions pour la mise en œuvre des étapes a), g) et j) d'un procédé conforme à l'une quelconque des revendications 1 à 7, lorsque ces instructions sont exécutées par un microprocesseur (42).

10. Support (74) d'enregistrement d'informations d'un processeur de sécurité, **caractérisé en ce qu'**il comporte des instructions pour la mise en œuvre des étapes b), e), g) et j) d'un procédé conforme à l'une quelconque des revendications 3 à 7 et des instructions pour traiter une commande de constitution de groupes de processeur de sécurité, lorsque ces instructions sont exécutées par un microprocesseur (72).

11. Tête (40) de réseau pour la mise en œuvre d'un procédé conforme à l'une quelconque des revendications 1 à 7, dans laquelle :
- la tête (40) de réseau est apte à transmettre, lors de l'étape a), à un ensemble de terminaux (10, 20, 30), sur une liaison point-à-multipoint établie dans un premier réseau (2) de communication, un contenu multimédia protégé, synchronisé avec un premier message de contrôle d'accès comportant un cryptogramme d'un mot de contrôle nécessaire à tout terminal pour accéder au contenu multimédia,
- la tête de réseau comporte un microprocesseur (42) programmé pour, lors de l'étape g), transmettre, au premier processeur (70) de sécurité, la commande de suspension, **caractérisée en ce que** le microprocesseur (42) est également programmé pour, lors de l'étape j), transmettre, au premier processeur (70) de sécurité, la commande de rétablissement.

12. Processeur (70) de sécurité pour la mise en œuvre d'un procédé conforme à l'une quelconque des revendications 3 à 7, dans lequel le processeur de sécurité est apte :
- lors de l'étape b), à déchiffrer le cryptogramme du mot de contrôle contenu dans le premier message de contrôle d'accès pour obtenir le mot de contrôle déchiffré, puis à renvoyer le mot de contrôle déchiffré vers le serveur (50) de partage,
- lors de l'étape e), à calculer, en réponse à la commande d'identification reçue et en fonction d'un identifiant de ce processeur (70) de sécurité enregistré dans une mémoire (74) du processeur de sécurité, une donnée d'identification qui permet de déterminer ledit identifiant, puis à transmettre la donnée d'identification au serveur (50) de partage,
- lors de l'étape g), en réponse à la commande de suspension, à basculer :
- d'un état actif, dans lequel, en réponse à la réception d'un message de contrôle d'accès, le processeur (70) de sécurité déchiffre le cryptogramme du mot de contrôle contenu dans ledit message pour obtenir le mot de contrôle déchiffré, puis retourne le mot de contrôle déchiffré au serveur (50) de partage, vers
- un état inactif dans lequel, le processeur (70) de sécurité ne retourne au serveur (50) de partage aucune réponse à la réception d'un message de contrôle d'accès, puis,
- lors de l'étape j), en réponse à la commande de rétablissement, à basculer de l'état inactif vers l'état actif,
**caractérisé en ce que** le processeur (70) de sécurité comporte un microprocesseur (72) programmé pour traiter une commande de constitution de groupes de processeurs de sécurité.

13. Dispositif (60) d'identification pour la mise en œuvre d'un procédé conforme à l'une quelconque des revendications 1 à 7, dans lequel le dispositif (60) d'identification est apte :
- lors de l'étape c), à se connecter, d'une part à la tête (40) de réseau par l'intermédiaire d'un troisième réseau (6) de communication, et d'autre part au serveur (50) de partage par l'intermédiaire du deuxième réseau (4) de communication,
- lors de l'étape d), à calculer un deuxième message de contrôle d'accès comportant un cryptogramme d'un mot de contrôle et une commande d'identification, puis à transmettre, au serveur (50) de partage, le deuxième message de contrôle d'accès,
- lors de l'étape f), à déterminer, en fonction de la donnée d'identification, l'identifiant du premier processeur (70) de sécurité, puis à le mémoriser,
dans lequel le dispositif (60) d'identification comporte un microprocesseur (62) programmé pour :
- lors de l'étape g), requérir, de la tête (40) de réseau, la transmission d'une commande de suspension du premier processeur (70) de sécurité dont il a mémorisé l'identifiant lors d'une précédente mise en œuvre de l'étape f),
- lors de l'étape i), réitérer les étapes d) et f) avec le deuxième processeur (70) de sécurité à la place du premier processeur (70) de sécurité pour identifier ce deuxième processeur de sécurité,
**caractérisé en ce que** le microprocesseur (62) est également programmé pour, après l'étape i) et lors de l'étape j), en réponse à l'identification au moins du deuxième processeur (70) de sécurité, requérir, de la tête (40) de réseau, la transmission d'une commande de rétablissement du premier processeur (70) de sécurité.

## Patentansprüche

1. Verfahren zur Identifizierung von Sicherheitsprozessoren in einem System zur Bereitstellung von geschützten Multimediainhalten, wobei bei dem Verfahren:
a) eine Kopfstelle auf einer Punkt-zu-Mehrpunkt-Verbindung, die in einem ersten Kommunikationsnetzwerk hergestellt ist, an eine Endgerätemenge einen geschützten Multimediainhalt überträgt (100), der mit einer ersten Zugriffssteuernachricht synchronisiert ist, die ein Kryptogramm eines Steuerworts aufweist, das jedes Endgerät benötigt, um auf den Multimediainhalt zuzugreifen,
b) mindestens ein Endgerät, das anfordernde genannt, die erste Zugriffssteuernachricht empfängt (100), sie dann in einem zweiten Kommunikationsnetzwerk an einen Server zur gemeinsamen Nutzung überträgt (102), wobei der Server zur gemeinsamen Nutzung die erste Zugriffssteuernachricht an einen ersten Sicherheitsprozessor überträgt (120), wobei der erste Sicherheitsprozessor das Kryptogramm des Steuerworts dechiffriert (120), das in der ersten Zugriffssteuernachricht enthalten ist, um das dechiffrierte Steuerwort zu erhalten, dann das dechiffrierte Steuerwort an den Server zur gemeinsamen Nutzung zurücksendet (124), der wiederum das dechiffrierte Steuerwort an das anfordernde Endgerät zurücksendet (124), wobei das oder die anfordernden Endgeräte nur einen Teil der Endgerätemenge darstellen,
c) sich eine Identifikationsvorrichtung einerseits mit der Kopfstelle und andererseits mittels des zweiten Kommunikationsnetzwerks mit dem Server zur gemeinsamen Nutzung verbindet (110),
d) die Identifikationsvorrichtung eine zweite Zugriffssteuernachricht berechnet (112), die ein Kryptogramm eines Steuerworts und einen Identifikationsbefehl aufweist, dann die zweite Zugriffssteuernachricht an den Server zur gemeinsamen Nutzung überträgt (112),
e) der Server zur gemeinsamen Nutzung die zweite Zugriffssteuernachricht in gleicher Weise wie die erste Zugriffssteuernachricht beim Schritt b) an den ersten Sicherheitsprozessor überträgt (120), wobei der erste Sicherheitsprozessor in Reaktion auf den empfangenen Identifikationsbefehl und in Abhängigkeit von einer Kennung dieses ersten Sicherheitsprozessors, die in einem Speicher des ersten Sicherheitsprozessors gespeichert ist, eine Identifikationsangabe berechnet (126), die es erlaubt, die Kennung zu bestimmen, dann die Identifikationsangabe an den Server zur gemeinsamen Nutzung überträgt (126), der sie wiederum an die Identifikationsvorrichtung überträgt (126),
f) die Identifikationsvorrichtung in Abhängigkeit von der Identifikationsangabe die Kennung des ersten Sicherheitsprozessors bestimmt (128), sie dann speichert (128),
g) auf Anforderung der Identifikationsvorrichtung die Kopfstelle an den ersten Sicherheitsprozessor, dessen Kennung sie bei einer vorhergehenden Durchführung des Schritts f) gespeichert hat, einen Befehl zur Suspendierung des ersten Sicherheitsprozessors überträgt (136), der erste Sicherheitsprozessor dann in Reaktion darauf zwischen folgenden Zuständen umschaltet (136):
- von einem aktiven Zustand, in welchem der Sicherheitsprozessor in Reaktion auf den Empfang einer Zugriffssteuernachricht das Kryptogramm des Steuerworts dechiffriert, das in der Nachricht enthalten ist, um das dechiffrierte Steuerwort zu erhalten, dann das dechiffrierte Steuerwort an den Server zur gemeinsamen Nutzung zurückgibt, zu
- einem inaktiven Zustand, in welchem der Sicherheitsprozessor keine Rückmeldung auf den Empfang einer Zugriffssteuernachricht an den Server zur gemeinsamen Nutzung zurückgibt, dann,
h) der Server zur gemeinsamen Nutzung erkennt (120), dass sich der erste Sicherheitsprozessor in seinem inaktiven Zustand befindet und dann bei den nachfolgenden Ausführungen des Schritts b) die Zugriffssteuernachrichten an einen zweiten Sicherheitsprozessor anstelle des ersten Sicherheitsprozessors überträgt (120), dann
i) die Schritte d) bis f) dann mit dem zweiten Sicherheitsprozessor anstelle des ersten Sicherheitsprozessors wiederholt werden, um diesen zweiten Sicherheitsprozessor zu identifizieren,
**dadurch gekennzeichnet, dass** das Verfahren nach dem Schritt i) Folgendes aufweist:
j) in Reaktion auf die Identifikation wenigstens des zweiten Sicherheitsprozessors, auf Anforderung der Identifikationsvorrichtung, überträgt (134) die Kopfstelle an den ersten Sicherheitsprozessor einen Befehl zur Wiederherstellung des ersten Sicherheitsprozessors, dann schaltet der erste Sicherheitsprozessor in Reaktion darauf vom inaktiven Zustand zum aktiven Zustand um (134).

2. Verfahren nach Anspruch 1, wobei:
- bevor der Schritt g) für einen beliebigen der Sicherheitsprozessoren einer ersten Gruppe von mehreren verschiedenen Sicherheitsprozessoren durchgeführt wird, zu welcher der erste Sicherheitsprozessor gehört, wobei diese erste Gruppe nur einen Teil der Sicherheitsprozessoren aufweist, die in dem System zur Bereitstellung von Multimediainhalten genutzt werden:
- die Schritte d) bis f) für jeden der Sicherheitsprozessoren dieser ersten Gruppe ausgeführt werden, dann
- eine Kennung dieser ersten Gruppe in dem Speicher jedes der Sicherheitsprozessoren dieser ersten Gruppe gespeichert (132) wird, dann
- beim Schritt g):
- der Suspendierungsbefehl, der durch die Kopfstelle übertragen (136) wird, ein Befehl zur Suspendierung der Menge der Sicherheitsprozessoren der ersten Gruppe ist, wobei dieser Suspendierungsbefehl die Kennung der ersten Gruppe aufweist und keine einzelne Kennung für jeden Sicherheitsprozessor dieser ersten Gruppe aufweist,
- dieser Suspendierungsbefehl an jeden der Sicherheitsprozessoren der ersten Gruppe übertragen (136) wird, dann nur jeder der Sicherheitsprozessoren der ersten Gruppe in Reaktion darauf vom aktiven Zustand zum inaktiven Zustand umschaltet (136), dann,
- beim Schritt j):
- der Wiederherstellungsbefehl, der durch die Kopfstelle übertragen (134) wird, ein Befehl zur Wiederherstellung der Menge der Sicherheitsprozessoren der ersten Gruppe ist, wobei dieser Wiederherstellungsbefehl die Kennung der ersten Gruppe aufweist und keine einzelne Kennung für jeden Sicherheitsprozessor dieser ersten Gruppe aufweist,
- dieser Wiederherstellungsbefehl an jeden der Sicherheitsprozessoren der ersten Gruppe übertragen (134) wird, dann nur jeder der Sicherheitsprozessoren des ersten Gruppe in Reaktion darauf vom inaktiven Zustand zum aktiven Zustand umschaltet (134).

3. Verfahren nach Anspruch 2, wobei das Speichern (132) einer Kennung der ersten Gruppe im Speicher jedes der Sicherheitsprozessoren dieser ersten Gruppe vor dem Schritt g) auf Anforderung der Identifikationsvorrichtung das Übertragen (132), durch die Kopfstelle, eines Befehls zur Bildung der ersten Gruppe an jeden der Sicherheitsprozessoren der ersten Gruppe, dann, in Reaktion darauf, das Speichern (132) der Kennung der ersten Gruppe durch jeden der Sicherheitsprozessoren der ersten Gruppe in seinem Speicher aufweist.

4. Verfahren nach einem der vorhergehenden Ansprüche, wobei bei mindestens einem der Befehle, die durch die Kopfstelle übertragen (132, 134, 136) werden, dies in einer Zugriffssteuernachricht erfolgt, die ein Kryptogramm eines Steuerworts aufweist und an die Endgerätemenge übertragen wird.

5. Verfahren nach Anspruch 2, wobei:
- die Identifikationsvorrichtung bestimmt (130), ob eine ausgewählte Bedingung aus der Menge, die von den folgenden Bedingungen gebildet ist, überprüft ist:
- N ist größer als eine vorbestimmte, streng positive Schwelle, wobei N die Anzahl von Sicherheitsprozessoren ist, die die erste Gruppe von Sicherheitsprozessoren bilden,
- die Gesamtidentifikationsquote N/T ist niedriger als eine vorbestimmte, streng positive Schwelle, wobei die Schwelle eine Konstante ist oder in Abhängigkeit von einem Anfangswert der Gesamtidentifikationsquote berechnet wird, wobei T die Zeitdauer ist, die seit der letzen Durchführung des Schritts j) verstrichen ist,
- eine Zahl n ist niedriger als eine vorbestimmte, streng positive Schwelle, wobei die Schwelle eine Konstante ist oder in Abhängigkeit von einem Anfangswert der Zahl n berechnet wird, wobei n die Anzahl von Sicherheitsprozessoren ist, die während der letzten Periode der gegebenen Zeitdauer t kleiner als T, die seit der letzten Durchführung des Schritts j) verstrichen ist, identifiziert wurden,
- eine lokale Identifikationsquote n/t ist niedriger als eine vorbestimmte, streng positive Schwelle, wobei die Schwelle eine Konstante ist oder in Abhängigkeit von einem Anfangswert der lokalen Identifikationsquote berechnet wird, und
- sobald diese Bedingung erfüllt ist, in Reaktion darauf der Schritt g) durchgeführt wird.

6. Verfahren nach einem der vorhergehenden Ansprüche, wobei:
- die Identifikationsvorrichtung bestimmt (130), ob eine ausgewählte Bedingung aus der Menge, die von den folgenden Bedingungen gebildet ist, erfüllt ist:
- N ist größer als eine vorbestimmte, streng positive Schwelle, wobei N die Anzahl von Sicherheitsprozessoren ist, die seit der letzten Durchführung des Schritts g) für den ersten Sicherheitsprozessor neu identifiziert wurden,
- die Gesamtidentifikationsquote N/T ist niedriger als eine vorbestimmte, streng positive Schwelle, wobei die Schwelle eine Konstante ist oder in Abhängigkeit von einem Anfangswert der Gesamtidentifikationsquote berechnet wird, wobei T die Zeitdauer ist, die seit der letzen Durchführung des Schritts g) für den ersten Sicherheitsprozessor verstrichen ist,
- eine Zahl n ist niedriger als eine vorbestimmte, streng positive Schwelle, wobei die Schwelle eine Konstante ist oder in Abhängigkeit von einem Anfangswert der Zahl n berechnet wird, wobei n die Anzahl von Sicherheitsprozessoren ist, die während der letzten Zeitspanne der gegebenen Zeitdauer t kleiner als T identifiziert wurden, die seit der letzten Durchführung des Schritts g) verstrichen ist,
- die lokale Identifikationsquote n/t ist niedriger als eine vorbestimmte, streng positive Schwelle, wobei die Schwelle eine Konstante ist oder in Abhängigkeit von einem Anfangswert der lokalen Identifikationsquote berechnet wird, und
- sobald diese Bedingung erfüllt ist, in Reaktion darauf der Schritt j) durchgeführt wird.

7. Verfahren nach einem der vorhergehenden Ansprüche, wobei beim Schritt d) (112) die Identifikationsvorrichtung an die Kopfstelle eine Anforderung überträgt, in Reaktion auf welche die Kopfstelle das Kryptogramm des Steuerworts oder die zweite Zugriffssteuernachricht berechnet, es/sie dann an die Identifikationsvorrichtung zurücksendet.

8. Träger (64) zur Speicherung von Informationen einer Identifikationsvorrichtung, **dadurch gekennzeichnet, dass** er Anweisungen für die Durchführung der Schritte c), d), f), g), i) und j) eines Verfahrens nach einem der vorhergehenden Ansprüche, wenn diese Anweisungen von einem Mikroprozessor (62) ausgeführt werden, aufweist.

9. Träger (44) zur Speicherung von Informationen einer Kopfstelle, **dadurch gekennzeichnet, dass** er Anweisungen für die Durchführung der Schritte a), g) und j) eines Verfahrens nach einem der Ansprüche 1 bis 7, wenn diese Anweisungen von einem Mikroprozessor (42) ausgeführt werden, aufweist.

10. Träger (74) zur Speicherung von Informationen eines Sicherheitsprozessors, **dadurch gekennzeichnet, dass** er Anweisungen für die Durchführung der Schritte b), e), g) und j) eines Verfahrens nach einem der Ansprüche 3 bis 7 und Anweisungen zum Verarbeiten eines Befehls zur Bildung von Sicherheitsprozessorgruppen, wenn diese Anweisungen von einem Mikroprozessor (72) ausgeführt werden, aufweist.

11. Kopfstelle (40) für die Durchführung eines Verfahrens nach einem der Ansprüche 1 bis 7, wobei:
- die Kopfstelle (40) geeignet ist, beim Schritt a) auf einer Punkt-zu-Mehrpunkt-Verbindung, die in einem ersten Kommunikationsnetzwerk (2) hergestellt ist, an eine Endgerätemenge (10, 20, 30) einen geschützten Multimediainhalt zu übertragen, der mit einer ersten Zugriffssteuernachricht synchronisiert ist, die ein Kryptogramm eines Steuerworts aufweist, das jedes Endgerät benötigt, um auf den Multimediainhalt zuzugreifen,
- die Kopfstelle einen Mikroprozessor (42) aufweist, der dafür programmiert ist, beim Schritt g) den Suspendierungsbefehl an den ersten Sicherheitsprozessor (70) zu übertragen, **dadurch gekennzeichnet, dass** der Mikroprozessor (42) ebenfalls dafür programmiert ist, beim Schritt j) den Wiederherstellungsbefehl an den ersten Sicherheitsprozessor (70) zu übertragen.

12. Sicherheitsprozessor (70) für die Durchführung eines Verfahrens nach einem der Ansprüche 3 bis 7, wobei der Sicherheitsprozessor geeignet ist:
- beim Schritt b) das Kryptogramm des Steuerworts zu dechiffrieren, das in der ersten Zugriffssteuernachricht enthalten ist, um das dechiffrierte Steuerwort zu erhalten, dann das dechiffrierte Steuerwort an den Server (50) zur gemeinsamen Nutzung zurückzusenden,
- beim Schritt e) in Reaktion auf den empfangenen Identifikationsbefehl und in Abhängigkeit von einer Kennung dieses Sicherheitsprozessors (70), die in einem Speicher (74) des Sicherheitsprozessors gespeichert ist, eine Identifikationsangabe zu berechnen, die es erlaubt, die Kennung zu bestimmen, dann die Identifikationsangabe an den Server zur gemeinsamen Nutzung (50) zu übertragen,
- beim Schritt g) in Reaktion auf den Suspendierungsbefehl, zwischen folgenden Zuständen umzuschalten:
- von einem aktiven Zustand, in welchem der Sicherheitsprozessor (70) in Reaktion auf den Empfang einer Zugriffssteuernachricht das Kryptogramm des Steuerworts dechiffriert, das in der Nachricht enthalten ist, um das dechiffrierte Steuerwort zu erhalten, dann das dechiffrierte Steuerwort an den Server (50) zur gemeinsamen Nutzung zurückgibt, zu
- einem inaktiven Zustand, in welchem der Sicherheitsprozessor (70) keine Rückmeldung auf den Empfang einer Zugriffssteuernachricht an den Server (50) zur gemeinsamen Nutzung zurückgibt, dann,
- beim Schritt j), in Reaktion auf den Wiederherstellungsbefehl vom inaktiven Zustand zum aktiven Zustand umzuschalten,
**dadurch gekennzeichnet, dass** der Sicherheitsprozessor (70) einen Mikroprozessor (72) aufweist, der dafür programmiert ist, einen Befehl zur Bildung von Sicherheitsprozessorgruppen zu verarbeiten.

13. Identifikationsvorrichtung (60) für die Durchführung eines Verfahrens nach einem der Ansprüche 1 bis 7, wobei die Identifikationsvorrichtung (60) geeignet ist:
- sich beim Schritt c) einerseits mittels eines dritten Kommunikationsnetzwerks (6) mit der Kopfstelle (40) und andererseits mittels des zweiten Kommunikationsnetzwerks (4) mit dem Server (50) zur gemeinsamen Nutzung zu verbinden,
- beim Schritt d) eine zweite Zugriffssteuernachricht zu berechnen, die ein Kryptogramm eines Steuerworts und einen Identifikationsbefehl aufweist, dann die zweite Zugriffssteuernachricht an den Server (50) zur gemeinsamen Nutzung zu übertragen,
- beim Schritt f) in Abhängigkeit von der Identifikationsangabe die Kennung des ersten Sicherheitsprozessors (70) zu bestimmen, sie dann zu speichern,
wobei die Identifikationsvorrichtung (60) einen Mikroprozessor (62) aufweist, der dafür programmiert ist:
- beim Schritt g) von der Kopfstelle (40) die Übertragung eines Befehls zur Suspendierung des ersten Sicherheitsprozessors (70) anzufordern, dessen Kennung sie bei einer vorhergehenden Durchführung des Schritts f) gespeichert hat,
- beim Schritt i) die Schritte d) und f) mit dem zweiten Sicherheitsprozessor (70) anstelle des ersten Sicherheitsprozessors (70) zu wiederholen, um diesen zweiten Sicherheitsprozessor zu identifizieren,
**dadurch gekennzeichnet, dass** der Mikroprozessor (62) ebenfalls dafür programmiert ist, nach dem Schritt i) und beim Schritt j) in Reaktion auf die Identifikation wenigstens des zweiten Sicherheitsprozessors (70) von der Kopfstelle (40) die Übertragung eines Befehls zur Wiederherstellung des ersten Sicherheitsprozessors (70) anzufordern.

## Claims

1. Method for identifying security processors, in a system for providing protected multimedia content, in which method:
a) a network head-end transmits (100), to a set of terminals, on a point-to-multipoint link established in a first communication network, a protected multimedia content, synchronized with a first access control message comprising a cryptogram of a control word required by any terminal in order to access the multimedia content,
b) at least one, so-called requesting, terminal receives (100) the first access control message, and then transmits it (102), on a second communication network, to a sharing server, which sharing server transmits (120) the first access control message to a first security processor, which first security processor decrypts (120) the cryptogram of the control word contained in the first access control message so as to obtain the decrypted control word, and then returns (124) the decrypted control word to the sharing server, which returns (124) in turn the decrypted control word to the requesting terminal, the requesting terminal or terminals representing only some of the set of terminals,
c) an identification device connects (110), on the one hand to the network head-end and on the other hand to the sharing server by way of the second communication network,
d) the identification device computes (112) a second access control message comprising a cryptogram of a control word and an identification command, and then transmits (112), to the sharing server, the second access control message,
e) the sharing server transmits (120) the second access control message, in the same manner as the first access control message during step b), to the first security processor, which first security processor computes (126), in response to the identification command received and as a function of an identifier of this first security processor recorded in a memory of the first security processor, an identification datum which makes it possible to determine said identifier, and then transmits (126) the identification datum to the sharing server, which transmits it (126) in turn to the identification device,
f) the identification device determines (128), as a function of the identification datum, the identifier of the first security processor, and then stores it (128),
g) upon request from the identification device, the network head-end transmits (136), to the first security processor whose identifier it has stored during a previous implementation of step f), a command for suspending the first security processor, and then the first security processor, in response, switches (136):
- from an active state, in which, in response to the receipt of an access control message, the security processor decrypts the cryptogram of the control word contained in said message so as to obtain the decrypted control word, and then returns the decrypted control word to the sharing server, to
- an inactive state in which the security processor does not return to the sharing server any response to the receipt of an access control message, and then,
h) the sharing server detects (120) that the first security processor is in its inactive state and then transmits (120), during the following executions of step b), the access control messages to a second security processor in place of the first security processor, and then
i) steps d) to f) are then repeated with the second security processor in place of the first security processor so as to identify this second security processor,
**characterized in that**, after step i), the method comprises:
j) in response to the identification at least of the second security processor, upon request from the identification device, the network head-end transmits (134), to the first security processor, a command for restoral of the first security processor, and then the first security processor, in response, switches (134) from the inactive state to the active state.

2. Method according to Claim 1, wherein:
- before step g) is implemented for any one of the security processors of a first group of several different security processors to which the first security processor belongs, this first group comprising only some of the security processors used in the system for providing multimedia content:
- steps d) to f) are executed for each of the security processors of this first group, and then
- an identifier of this first group is recorded (132) in the memory of each of the security processors of this first group, and then
- during step g):
- the suspension command transmitted (136) by the network head-end is a command for suspending the set of security processors of the first group, this suspension command comprising the identifier of the first group and being devoid of any individual identifier for each security processor of this first group,
- this suspension command is transmitted (136) to each of the security processors of the first group, and then only each of the security processors of the first group, in response, switches (136) from the active state to the inactive state, and then,
- during step j):
- the restoral command transmitted (134) by the network head-end is a restoral command for restoring the set of security processors of the first group, this restoral command comprising the identifier of the first group and being devoid of any individual identifier for each security processor of this first group,
- this restoral command is transmitted (134) to each of the security processors of the first group, and then only each of the security processors of the first group, in response, switches (134) from the inactive state to the active state.

3. Method according to Claim 2, wherein the recording (132) of an identifier of the first group in the memory of each of the security processors of this first group, comprises, prior to step g), upon request from the identification device, the transmission (132), by the network head-end, of a command for constructing the first group to each of the security processors of the first group, and then, in response, the recording (132) of the identifier of the first group in its memory by each of the security processors of the first group.

4. Method according to any one of the preceding claims, wherein one at least of the commands transmitted (132, 134, 136) by the network head-end, is so in an access control message comprising a cryptogram of a control word and transmitted to the set of terminals.

5. Method according to Claim 2, wherein:
- the identification device determines (130) whether a condition chosen from the set consisting of the following conditions, is satisfied:
- N is greater than a predetermined strictly positive threshold, where N is the number of security processors constituting the first group of security processors,
- the global identification rate N/T is less than a predetermined strictly positive threshold, said threshold being a constant or computed as a function of an initial value of said global identification rate, where T is the duration that has elapsed since the last implementation of step j),
- a number n is less than a predetermined strictly positive threshold, said threshold being a constant or computed as a function of an initial value of said number n, where n is the number of security processors identified during the last period of given duration t less than T that has elapsed since the last implementation of step j),
- a local identification rate n/t is less than a predetermined strictly positive threshold, said threshold being a constant or computed as a function of an initial value of said local identification rate, and
- as soon as this condition is satisfied, in response, step g) is implemented.

6. Method according to any one of the preceding claims, wherein:
- the identification device determines (130) whether a condition chosen from the set consisting of the following conditions, is satisfied:
- N is greater than a predetermined strictly positive threshold, where N is the number of security processors newly identified since the last implementation of step g) for the first security processor,
- the global identification rate N/T is less than a predetermined strictly positive threshold, said threshold being a constant or computed as a function of an initial value of said global identification rate, where T is the duration that has elapsed since the last implementation of step g) for the first security processor,
- a number n is less than a predetermined strictly positive threshold, said threshold being a constant or computed as a function of an initial value of said number n, where n is the number of security processors identified during the last period of given duration t less than T that has elapsed since the last implementation of step g),
- the local identification rate n/t is less than a predetermined strictly positive threshold, said threshold being a constant or computed as a function of an initial value of said local identification rate, and
- as soon as this condition is satisfied, in response, step j) is implemented.

7. Method according to any one of the preceding claims, in which, during step d) (112), the identification device transmits, to the network head-end, a request in response to which the network head-end computes the cryptogram of the control word or the second access control message and then returns it to the identification device.

8. Information recording medium (64) for an identification device, **characterized in that** it comprises instructions for the implementation of steps c), d), f), g), i) and j) of a method in accordance with any one of the preceding claims, when these instructions are executed by a microprocessor (62).

9. Information recording medium (44) for a network head-end, **characterized in that** it comprises instructions for the implementation of steps a), g) and j) of a method in accordance with any one of Claims 1 to 7, when these instructions are executed by a microprocessor (62).

10. Information recording medium (74) for a security processor, **characterized in that** it comprises instructions for the implementation of steps b), e), g) and j) of a method in accordance with any one of Claims 3 to 7 and instructions for processing a command for constructing groups of security processors, when these instructions are executed by a microprocessor (72).

11. Network head-end (40) for the implementation of a method in accordance with any one of Claims 1 to 7, wherein:
- the network head-end (40) is able to transmit, during step a), to a set of terminals (10, 20, 30), on a point-to-multipoint link established in a first communication network (2), a protected multimedia content, synchronized with a first access control message comprising a cryptogram of a control word required by any terminal in order to access the multimedia content,
- the network head-end comprises a microprocessor (42) programmed to, during step g), transmit, to the first security processor (70), the suspension command, **characterized in that** the microprocessor (42) is also programmed to, during step j), transmit, to the first security processor (70), the restoral command.

12. Security processor (70) for the implementation of a method in accordance with any one of Claims 3 to 7, wherein the security processor is able:
- during step b), to decrypt the cryptogram of the control word contained in the first access control message so as to obtain the decrypted control word, and then to return the decrypted control word to the sharing server (50),
- during step e), to compute, in response to the identification command received and as a function of an identifier of this security processor (70) recorded in a memory (74) of the security processor, an identification datum which makes it possible to determine said identifier, and then to transmit the identification datum to the sharing server (50),
- during step g), in response to the suspension command, to switch:
- from an active state, in which, in response to the receipt of an access control message, the security processor (70) decrypts the cryptogram of the control word contained in said message so as to obtain the decrypted control word, and then returns the decrypted control word to the sharing server (50), to
- an inactive state in which the security processor (70) does not return to the sharing server (50) any response to the receipt of an access control message, and then,
- during step j), in response to the restoral command, to switch from the inactive state to the active state,
**characterized in that** the security processor (70) comprises a microprocessor (72) programmed to process a command for constructing groups of security processors.

13. Identification device (60) for the implementation of a method in accordance with any one of Claims 1 to 7, wherein the identification device (60) is able:
- during step c), to connect, on the one hand, to the network head-end (40) by way of a third communication network (6), and, on the other hand, to the sharing server (50) by way of the second communication network (4),
- during step d), to compute a second access control message comprising a cryptogram of a control word and an identification command, and then to transmit, to the sharing server (50), the second access control message,
- during step f), to determine, as a function of the identification datum, the identifier of the first security processor (70), and then to store it,
wherein the identification device (60) comprises a microprocessor (62) programmed to:
- during step g), request, of the network head-end (40), the transmission of a command for suspending the first security processor (70) whose identifier it has stored during a previous implementation of step f),
- during step i), repeat steps d) and f) with the second security processor (70) in place of the first security processor (70) so as to identify this second security processor, **characterized in that** the microprocessor (62) is also programmed to, after step i) and during step j), in response to the identification at least of the second security processor (70), request, of the network head-end (40), the transmission of a command for restoral of the first security processor (70).
